# EUROPEAN PATENT SPECIFICATION

(11) **EP 4 440 197 B1**
(45) Date of publication and mention of the grant of the patent: **10.12.2025**
(21) Application number: 24153416.3
(22) Date of filing: 23.01.2024
(51) Int. Cl.: H04W 36/36

(54) **APPARATUSES, METHODS, AND COMPUTER PROGRAMS FOR CONDITIONAL MOBILITY**
VORRICHTUNGEN, VERFAHREN UND COMPUTERPROGRAMME FÜR BEDINGTE MOBILITÄT
APPAREILS, PROCÉDÉS ET PROGRAMMES INFORMATIQUES POUR MOBILITÉ CONDITIONNELLE

(30) Priority: 10.02.2023 FI 20235135
(43) Date of publication of application: 02.10.2024
(73) Proprietor: Nokia Technologies Oy, 02610 Espoo (FI)
(72) Inventor: PALKA, Dariusz, 30-348 Krakow (PL); GÜRSU, Halit Murat, 81379 Munich (DE); KHODAPANAH, Behnam, 85737 Ismaning (DE); SELVAGANAPATHY, Srinivasan, 560045 Bangalore (IN)
(74) Representative: Nokia EPO representatives

(56) References cited:
- US-A1- 2022 322 175
- "3rd Generation Partnership Project; Technical Specification Group Radio Access Network; NR; NR and NG-RAN Overall Description; Stage 2 (Release 17)", vol. RAN WG2, no. V17.3.0, 13 January 2023 (2023-01-13), pages 1 - 210, XP052235209, Retrieved from the Internet <URL:https://ftp.3gpp.org/Specs/archive/38_series/38.300/38300-h30.zip 38300-h30.docx> [retrieved on 20230113]
- NEC: "Overview of conditional PSCell addition", vol. RAN WG2, no. Electronic meeting; 20200817 - 20200828, 7 August 2020 (2020-08-07), XP052360095, Retrieved from the Internet <URL:https://ftp.3gpp.org/tsg_ran/WG2_RL2/TSGR2_111-e/Docs/R2-2006976.zip R2-2006976_CPA.docx> [retrieved on 20200807]

## Description

### Field of the disclosure

The examples described herein generally relate to conditional mobility operations.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards. "3rd Generation Partnership Project; Technical Specification Group Radio Access Network; NR; NR and NG-RAN Overall Description; Stage 2 (Release 17)", 3GPP STANDARD; TECHNICAL SPECIFICATION; 3GPP TS 38.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V17.3.0 13 January 2023 (2023-01-13), pages 1-210 discusses QoS Flows and that in 5G there are QoS flows that require guaranteed flow bit rate (GBR QoS Flows) and QoS Flows that do not require guaranteed flow bit rate (non-GBR QoS Flows). This document discloses that a UE receiving, from a source access node, a first radio resource control reconfiguration for configuring the UE to perform a conditional mobility operation with respect to at least one of a plurality of target cells. The UE subsequently performs the conditional mobility operation by monitoring, for at least one of the plurality of target cells indicated in the first radio resource control reconfiguration, the at least one execution condition for determining whether to initiate access with the at least one of the plurality of target cells.

### Summary

The invention is set out in the appended claims.

### Brief description of Figures

Some examples, will now be described, merely by way of illustration only, with reference to the accompanying drawings in which:
Figures 1 shows a schematic representation of a 5G system;
Figure 2 shows a schematic representation of a network apparatus;
Figure 3 shows a schematic representation of a user equipment;
Figures 4 to 6 illustrate signalling operations;
Figures 7 to 10 illustrate example signalling operations; and
Figures 11 to 13 illustrate operations that may be performed by the apparatus described herein.

### Detailed description

The following describes operations that may be performed more efficiently selecting data bearers for use for conditional mobility operations.

A bearer is a virtual concept that defines how user equipment (UE) data is treated when it travels across the network. One type of bearer is a Data Radio Bearer (DRB), which is used for data transmission only and which is provided for "guaranteed bit rate" (GBR) data transmissions (referred to herein as a GBR bearer) and/or for non-GBR data transmissions (referred to herein as a non-GBR bearer).

When a user equipment attaches to an access network for the first time and/or requests a new type of service, the UE is assigned a default bearer. The default bearer is a non-GBR bearer that remains configured as long as the UE is connected to the network (e.g., as long as the UE is in a radio resource control (RRC) connected state). The default bearer may be a bearer determined as providing a "best" service for a subscriber of the UE when the UE first attaches to the access network. The UE may have a single default bearer configured at a single point in time.

The UE may also be assigned at least one dedicated bearer on top of the default bearer(s). The dedicated bearer provides a dedicated tunnel for one or more specific traffic (e.g., Voice over IP (VoIP), video, chat, etc.), and so can provide special treatment to specific services. A dedicated bearer can be a GBR bearer or a non-GBR bearer. Dedicated bearers are used when a service cannot be provided to the UE at a Quality of Service (QoS) level associated with the default bearer(s) (e.g., because such a service has a higher QoS level associated to it than the QoS associated with the default bearer(s)).

As an aside, some brief information on QoS flows is provided.

Each QoS flow has a unique identifier, which is called a QoS Flow Identifier (QFI). There are two types of QoS flows: Guaranteed Bit Rate (GBR) QoS Flows and Non-GBR QoS Flows. A GBR QoS flow is associated with a GBR bearer. A non-GBR QoS flow is associated with a non-GBR bearer.

At the Non-Access Stratum (NAS) level, packet filters in UE and 5GC map uplink and downlink packets to QoS flows. At the Access Stratum (AS), rules in a UE and an Access Network map QoS flows to DRBs. On the radio interface, QoS flows are mapped to DRBs that are configured to deliver that QoS. Multiple QoS flows can be mapped to a single DRB. The access network independently decides how to map QoS flows to radio bearers. This is a flexible design since gNB can choose to map multiple QoS flows to a single radio bearer if such a radio bearer can be configured to fulfil the requirements of those QoS flows.

With respect to downlink traffic, data packets are marked with a QFI in an encapsulation header on the N3 interface between a UPF and an access network. The access network may use this QFI to determine which packets belong to which QoS flow. In particular, a service data adaptation protocol (SDAP) sublayer in the access network may map the flows to at least one suitable DRB. At the receiving end, UE's SDAP sublayer does the reverse mapping from DRBs to QoS flows. A similar flow happens for uplink packets, where the UE marks the packet with QFI in SDAP header.

In the following description of examples, certain aspects are explained with reference to devices that are often capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems (for example, current 6G proposals, IEEE 802.11, etc.).

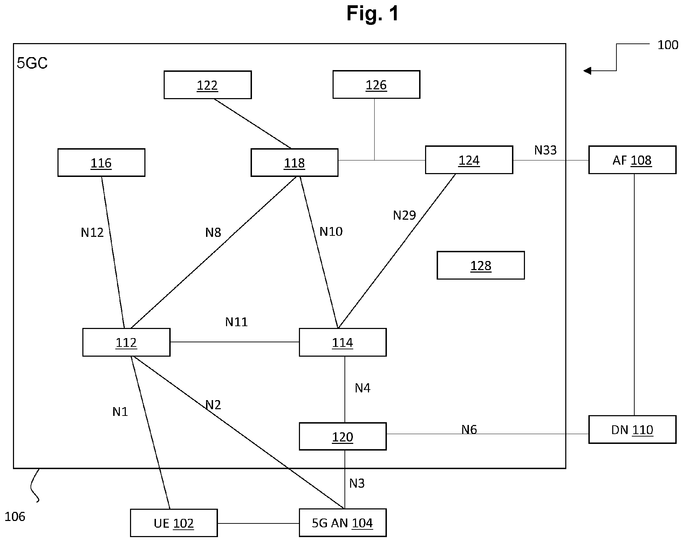

Before describing in detail the examples, certain general principles of a 5G wireless communication system are briefly explained with reference to Figures 1 to 3.

Figure 1 shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

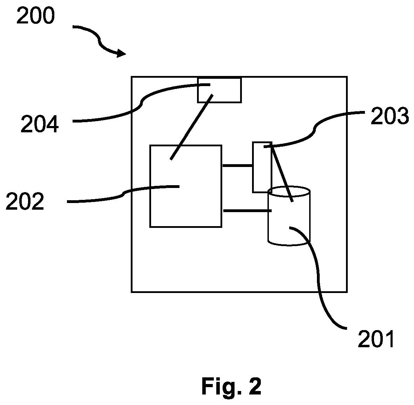

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR, and so forth. The control apparatus may be integrated with or external to a node or module of a core network or RAN. In some examples, base stations comprise a separate control apparatus unit or module. In other examples, the control apparatus can be another network element, such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example, the control apparatus 200 or processor 201 can be configured to execute an appropriate software code to provide the control functions. References to "code" herein are understood to refer to software code, and vice versa.

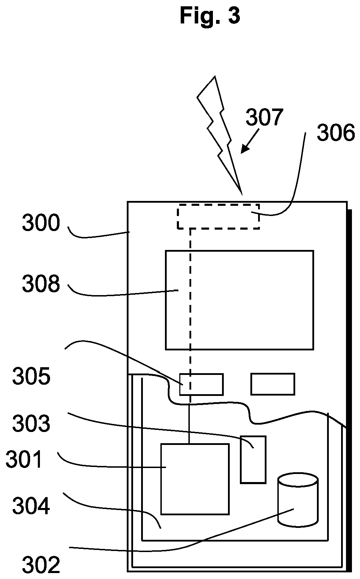

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is referred to as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. As described herein, the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided, for example, by means of a radio part and associated antenna arrangement. The antenna arrangement may be arranged internally or externally to the wireless device.

A wireless device is typically provided with at least one data processing entity 301, at least one memory 302 and other possible components 303 for use in software code and hardware aided execution of Tasks it is designed to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

The following description also provides illustrative examples with reference to Primary Secondary Cells (PSCells), Primary Cells (PCells), and Secondary Cells (SCells). The following will outline features of PSCells in relation to 5G New Radio, using terminology used therein. However, it is understood that the presently described principles are not limited to such terminology, and may be applied to other systems having a similar architecture. For example, in multi-radio-dual connectivity (MR-DC), a Primary Cell (PCell) may be a Long Term Evolution (LTE) cell (e.g., Evolved-Universal Terrestrial Radio Access-New Radio-dual connectivity (EN-DC)).

PSCells are a type of cell currently defined in 5G New Radio, along with Primary Cells (PCells), Secondary Cells (SCells) and Special Cells (SpCells). A PCell may be used as part of an initial access between a UE and an access network, and is considered to be a main cell in a master cell group (MCG). A PSCell may be comprised as part of a secondary cell group (SCG). The SpCells and SCells may be in at least one of the MCG and the SCG.

The cells may be controlled by network nodes. There are a maximum of two different types of network nodes in 5G New Radio: Master nodes (which provide a control plane connection to a core network); and Secondary Nodes (which do not have control plane connections to the core network). It is understood that not all 5G system deployments may comprise a master node and secondary node. For example, the Master and Secondary nodes may be present in a master node-dual connectivity deployment, but not in a standalone deployment. The Master and Secondary nodes may both provide user plane (e.g. data) connections to the core network. The Master node may control the PCell. In addition to the PCell, the Master node may control at least one PSCell, although this is not always the case. The Secondary node may control at least one PSCell.

There may further comprise an interface between the different nodes, depending on the dual connectivity option. An X2 interface is an interface between eNBs in LTE that may be reused between Radio Access Network (RAN) nodes in non-standalone operation (e.g., between an eNB and an en-gNB in an enhanced-dual connectivity case of non-standalone deployment). The Xn interface is an interface between RAN nodes in operating in a standalone operation (e.g., between a next generation (ng)-eNB and an ng-eNB/gNB, and between a gNB/ng-eNB and an gNB).

3GPP has issued a number of releases (Rel) for defining operating communication protocols related to a communications network. Currently, objectives and work are being set in relation to Release 18 (Rel. 18).

Conditional mobility was introduced in 3GPP Rel-16 to improve mobility robustness. Conditional mobility relates to providing a UE with at least one configuration to use for communicating with another cell after handover to that cell is performed, along with at least one threshold or condition for determining when to perform handover.

Therefore, as a part of this conditional mobility functionality, the network can prepare multiple target cells and provide UE with a conditional mobility configuration associated with mobility execution condition. The decision on mobility execution is therefore left to the UE, which is obliged to follow the conditional mobility configuration that defines how and when to execute a mobility event. The conditional mobility configuration may be provided to the UE by a source cell (e.g., by the current serving cell of the UE). The conditional mobility configuration may be prepared by source cell in co-operation with at least one target cell(s).

Conditional mobility preparation (e.g., the source cell communicating with the at least one target cell to obtain a conditional mobility configuration to provide to a UE) may be triggered by mobility-related measurement events received by the source cell. For example, in current 3GPP specifications, these measurement events may be A3/A5 measurement events in case of handover. Whenever a configured execution condition(s) is met for some target cell (the process for determining which being called an "evaluation phase"), the UE selects a corresponding target configuration and performs a mobility procedure to enable provision of services via the selected target cell. The performance of the mobility procedure is also referred to as an "execution phase".

There are several types of conditional mobility event. Of these, conditional handover (CHO), conditional Primary-Secondary Cell (PSCell) Addition (CPA) and conditional PSCell Change (CPC) will be illustrated below.

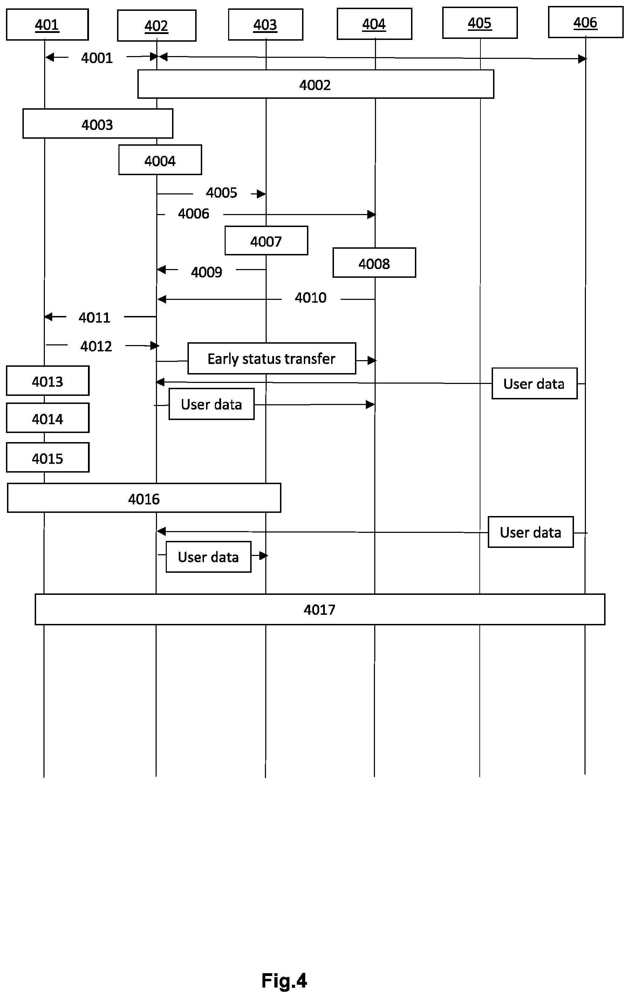

The signalling procedure for performing conditional handover is described in section 9.2.3.4.2 of TS 38.300. This is illustrated with respect to Figure 4.

Figure 4 illustrates signalling that may be performed between a UE 401, a source access node 402, a first target access node 403, a second target access node 404, an access and mobility function (AMF) 405 and a user plane function (UPF) 406.

During 4001, the UE 401, source access node 402, and UPF 406 establish an RRC connection for communicating user data.

During 4002, the source access node 402 obtains mobility control information for the UE 401 from the AMF 405.

During 4003, the source access node 402 provides the UE 401 with a measurement control and report configuration. This configures the UE 401 to provide measurement reporting to the source access node 402 according to the parameters associated with the configuration. Measurement reports may be provided during 4003.

During 4004, the source access node 402 makes a decision on CHO based on the measurement reports received according to the configuration of 4003, and chooses potential handover target access nodes (in the present case, the handover target access nodes are illustrated as being the first and second target access nodes).

During 4005, the source access node 402 signals a handover request to the first target access node 403 for requesting CHO information from the first target access node 403.

During 4006, the source access node 402 signals a handover request to the second target access node 404 for requesting CHO information from the second target access node 404.

During 4007, the first target access node 403 makes a decision on whether or not to admit the UE 401, and makes a list of candidate target cell(s) managed by the first target access node 403 for admitting the UE 401. This list of candidate target cell(s) may be based on a received list of suggested cell(s) received from the source access node 402 during 4005.

During 4008, the second target access node 404 makes a decision on whether or not to admit the UE 401, and makes a list of candidate target cell(s) managed by the second target access node 404 for admitting the UE 401. This list of candidate target cell(s) may be based on a received list of suggested cell(s) received from the source access node 402 during 4006.

During 4009, the first target access node 403 signals the source access node 402. This signalling may comprise a conditional handover configuration for the list of candidate target cell(s) prepared during 4007. This signalling may be comprised in a handover request acknowledgement.

During 4010, the second target access node 404 signals the source access node 402. This signalling may comprise a conditional handover configuration for the list of candidate target cell(s) prepared during 4008. This signalling may be comprised in a handover request acknowledgement.

During 4011, the source access node 402 signals the UE 401. This signalling may provide the UE with a configuration for CHO and handover execution conditions for implementing those CHO. It is understood that a handover execution condition for a specific target cell configuration may comprise a plurality of conditions to be fulfilled. This may be provided on a target cell-basis for the candidate target cell(s) information received during 4009 and 4010. This signalling may be provided in an RRCReconfiguration service operation.

During 4012, the UE 401 signals the source access node 402. This signalling may confirm that the UE 401 has received the signalling of 4011.

During 4013, the UE 401 evaluates the execution conditions received during 4012 to determine whether any of them are currently fulfilled. 4013 may be repeated periodically until at least one execution condition has been fulfilled.

During 4014, the UE 401 determines that as at least one execution condition for a target cell has been fulfilled, handover is to be performed to that target cell.

During 4015, the UE 401 synchronises to the new cell (provided by the first target access node 403 in the present example) using the configuration associated with the fulfilled execution condition.

During 4016, the UE 401 and first target access node 403 complete a CHO using the configuration associated with the fulfilled execution condition.

During 4017, path switch is performed (e.g., so that user plane data for the UE 401 is passed to the UE 401 via the first target access bide 403 instead of via the source access node 402, and the source access node 402 releases any UE context for the UE 401 stored at the source access node 402.

Conditional PSCell addition (CPA) and Conditional PSCell change (CPC) will now be illustrated. CPA and CPC were standardized in 3GPP Rel-16 and Rel-17 following a similar approach of Conditional HandOver (CHO) that was standardized in 3GPP Rel-16.

The basic functionality of PSCell addition and PSCell change is to enable a UE to respectively establish or change a secondary radio link to a cell of a secondary cell group (SCG) for dual connectivity purposes. The details on these procedures may be read from TS 37.340 and TS 38.331 for both Rel-16 and Rel-17.

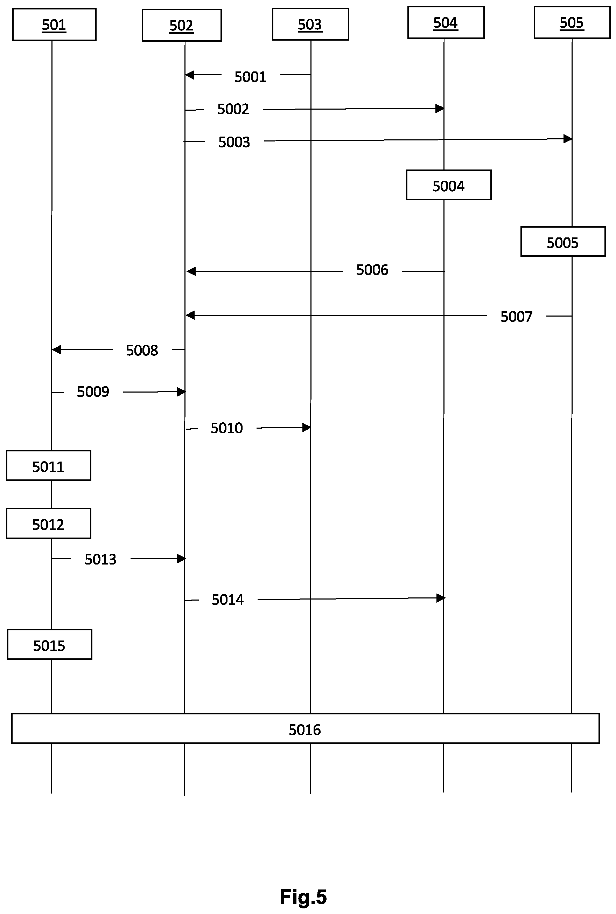

CPA and CPC are illustrated with respect to Figure 5.

Figure 5 illustrates signalling exchanged between a UE 501, a master node (MN) 502, a source secondary node (source SN) 503, a first target SN 504, and a second target SN 505.

The example signalling of Figure 5 relates to an SN-initiated inter-SN CPA/CPC procedure, which is described in section 10.5.2 of 3GPP TS 37.340. However, it is understood that other signalling may be performed for effecting CPA/CPC. For example, MN-initiated inter-SN may be performed in which CPA and/or CPC is triggered by an MN instead. This MN-initiated case differs from the SN-initiated case in that the MN is the entity that takes mobility decision based on measurements delivered by UE and decides on potential target SN cells.

During 5001, the source SN 503 signals the MN 502. This signalling may request that an SN change is requested. This signalling may be performed after the source SN 503 has determine that a cell change is to be performed by the UE 501 (e.g., based on measurement information received by the source SN 503 from the UE 501). The signalling may comprise respective indications of at least one potential mobility target (e.g., the first target SN 504 and the second target SN 505 in the present example). The signalling may comprise the respective indications in the form of a list of PSCell(s) prepared by each of the first and second target SNs. This list may comprise, for each of the PSCell(s) in the list, at least one respective execution condition for when that PSCell is to be switched to by the UE 501.

During 5002, the MN 502 signals the first target SN 504. This signalling may comprise an SN addition request. For example, this signalling may comprise a CPA request and/or a CPC request. This signalling may comprise an indication of the PSCell(s) managed by the first target SN 504 that are comprised in the list of 5001.

During 5003, the MN 502 signals the second target SN 505. This signalling may comprise an SN addition request. For example, this signalling may comprise a CPA request and/or a CPC request. This signalling may comprise an indication of the PSCell(s) managed by the second target SN 505 that are comprised in the list of 5001.

During 5004, the first target SN 504 determines whether or not to admit the UE 501, and, if the decision is positive, determines a list of candidate target PSCell(s) based on the list received during 5002.

During 5005, the second target SN 505 determines whether or not to admit the UE 501, and, if the decision is positive, determines a list of candidate target PSCell(s) based on the list received during 5003.

During 5006, the first target SN 504 signals the MN 502. This signalling may comprise an acknowledgement of the CPC and/or CPA request of 5002. This signalling may comprise respective conditional configuration for each PSCell prepared by the first target SN 504, along with respective identifier(s) of the prepared PSCell(s).

During 5007, the second target SN 505 signals the MN 502. This signalling may comprise an acknowledgement of the CPC and/or CPA request of 5003. This signalling may comprise respective conditional configuration for each PSCell prepared by the first target SN 504, along with respective identifier(s) of the prepared PSCell(s). This signalling may comprise respective conditional configuration for each PSCell prepared by the second target SN 505, along with respective identifier(s) of the prepared PSCell(s).

During 5008, the MN 502 signals the UE 501. This signalling may comprise an RRC reconfiguration. The RRC reconfiguration may comprise a configuration for configuring the UE 501 with CPC configurations and execution conditions on a target cell-basis.

During 5009, the UE 501 signals the MN 502. This signalling may indicate that UE has applied the reconfiguration received during 5008. For example, this signalling may comprise an RRC reconfiguration complete signalling operation.

During 5010, the MN 502 signals the source SN 503. This signalling may confirm, to the source SN 503, that the UE has been provided with reconfiguration information for a conditional change operation.

During 5011, the UE 501 evaluates the CPA and/or CPC conditions received during 5008 to determine whether any execution condition associated with a CPA and/or CPC configuration received during 5008.

During 5012, the UE 501 determines that at least one execution condition has been fulfilled during 5011, and determines to performs a PSCell change to (or addition of) one of the prepared PSCell(s) associated with that at least one execution condition. In the present example, the UE determines to perform a PSCell change to the first target SN 504.

During 5013, the UE 501 signals the MN 502. This signalling may indicate that the UE has determined to perform the PSCell change or addition of 5012. This signalling may comprise an RRC reconfiguration complete service operation.

During 5014, the MN 502 signals the first target SN 504. This signalling may indicate that the UE has performed an RRC reconfiguration operation to connect to a PSCell provided by the first target SN 504.

During 5015, the UE 501 disconnects from the source SN 503.

During 5016, the UE 501 performs random access with the first target SN 503 to synchronise with the selected PSCell associated with the fulfilled execution condition.

One of the paradigms of conditional mobility is such that the current serving cell of a UE is obliged to handle UEs that are configured to perform conditional mobility evaluations and executions in the same way as UEs that are not configured to perform conditional mobility evaluations and executions. This can be problematic in several ways.

For example, during the time between when a conditional mobility configured UE is provided with the conditional mobility configuration and when that UE makes a mobility decision, network configurations may change: New bearer(s) may be established or new Quality of Service (QoS) Flow(s) may be configured. For example, a new QoS Flow may be requested by a function or entity of the core network, and/or a new DRB however may be decided by RAN itself. The determination to establish a new bearer or configure a new QoS Flow may be performed for any of a plurality of different reasons. For example, a gNB may prefer to have a single QoS Flow handled by a separate DRB having "similar" QoS Flows handled by a specific type of DRB in order to make scheduling more efficient in certain situations. It is understood that, in 3GPP, more than one QoS Flow can be mapped to a single DRB. Therefore it is unnecessary for a new DRB to be established when a new QoS Flow is created.

Whenever such a network change happens, the current serving cell of the UE is obliged to reconfigure the UE accordingly, and this reconfiguration cannot be postponed. Whenever such reconfiguration succeeds (e.g., because the UE has not yet moved to any target cell and has been able to acknowledge the new reconfiguration positively), the conditional configuration previously configured at the UE is to be re-negotiated with all target cells and then updated at UE side. This is especially problematic in selective activation case when conditional configuration is not dropped after successful completion of mobility procedure.

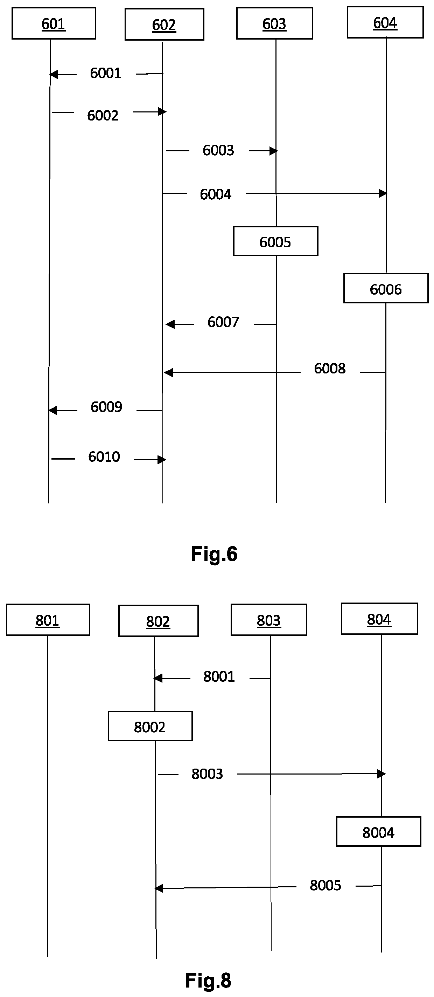

For example, each data radio bearer (DRB) and/or QoS Flow reconfiguration uses two re-configurations performed over RRC. The first reconfiguration is for changing a current UE configuration at source cell. The second reconfiguration is for modifying conditional configuration after re-negotiations with target cell(s)). These additional reconfigurations are illustrated with respect to Figure 6.

As another example, it can happen that conditional configuration's modification at UE side is failing because UE has already left the source cell when the new bearers and/or QoS flow(s) are established. This can lead to the discrepancy between the configuration currently at the UE and the configuration agreed between source cell and target cell(s).

These issues are less problematic for UEs that are not configured to perform conditional mobility operations. This is because such UEs may simply be provided with a DRB configuration to use for performing a mobility event at the same time as being instructed by the network to perform that mobility event (e.g., the UE is instructed to perform a mobility event using the provided DRB configuration).

These example issues of conditional mobility-configured UEs are illustrated with respect to Figure 6.

Figure 6 illustrates signalling between a UE 601, a source access node 602, a first target access node 603, and a second target access node 604. This signalling is performed after 4012.

During 6001, the source access node 602 signals the UE 601. This signalling may comprise an indication that there has been a change in the DRB. This signalling may comprise an RRC reconfiguration signalling operation.

During 6002, the UE 601 signals the source access node 602. This signalling may indicate that the UE has applied the configuration received during 6001. This signalling may comprise an RRC reconfiguration complete service operation.

During 6003, the source access node 602 signals the first target access node 603. This signalling may request an update to the conditional mobility configuration previously received from the first target access node 603. This signalling may comprise a handover request update signalling operation.

During 6004, the source access node 602 signals the second target access node 604. This signalling may request an update to the conditional mobility configuration previously received from the second target access node 604. This signalling may comprise a handover request update signalling operation.

During 6005, the first target access node 603 determines whether to update the conditional mobility configuration previously provided by the first target access node 603.

During 6006, the second target access node 604 determines whether to update the conditional mobility configuration previously provided by the second target access node 604.

During 6007, the first target access node 603 acknowledges the handover request of 6003. This signalling may provide the requested updated configuration requested during 6003.

During 6008, the second target access node 604 acknowledges the handover request of 6004. This signalling may provide the requested updated configuration requested during 6004.

During 6009, the source access node 602 signals the UE 601. This signalling may provide a conditional mobility configuration update to the UE 601. This signalling may be based on information received from the first and second target access nodes during 6007 and 6008. This signalling may comprise an RRC reconfiguration service operation.

During 6010, the UE 601 signals the source access node 602. This signalling may indicate that the UE 601 has applied the reconfiguration received during 6009.

Therefore, in contrast to the example of Figure 4, when there is a network property change (such as a new bearer), there is provided new:
∘ *RRCReconfiguration*/*RRCReconfigurationComplete (to re-configure UE at source cell)*
∘ *HANDOVER REQUEST*/*HANDOVER REQUEST ACKNOWLEDGE (to re-negotiate conditional configuration with candidate target(s))*
∘ *RRCReconfiguration*/*RRCReconfigurationComplete (to re-configure UE with new conditional configuration)*

To address at least one of the above-mentioned issues, the following proposes mechanisms relating to the use of a DRB configuration that allows avoiding the transmission of conditional configuration updates during the evaluation phase.

In particular, the following proposes configuring UEs to behave in a particular way during mobility evaluation (e.g., evaluation of conditions for performing a conditional mobility operation) and after mobility execution, with this UE behaviour being supported at the access point-side.

In more detail, the UE may be configured to use a preconfigured set of bearers in response to determining that a bearer change has negatively affected a current set of configured bearers. This set of bearers will be referred to herein as a universal set of bearers. The UE may be configured with the universal set of bearers in addition to being configured with a first (e.g., initial) set of bearers for use prior to the bearer change being determined. The universal set of bearers may be configured as a static (e.g., unchanging) DRB configuration that can be used during a transient phase of the conditional mobility procedure (e.g., from when a UE appears at a target cell up until the target cell provides the UE with a new bearer configuration for use in communicating between the UE and the target cell after the UE synchronizes with the target cell). The universal set of bearers may therefore be referred to as a transient static DRB configuration, or short-term, unchanging DRB configuration or the like.

The preconfigured universal set of bearers may comprise at least one bearer for carrying non-GBR data (e.g., the set of bearers may comprise a single default DRB, as discussed above), as well as at least one bearer for carrying GBR data. Therefore, the preconfigured universal set of bearers may comprise at least one non-GBR bearer and at least one GBR bearer. The universal set of bearers may comprise a single non-GBR bearer and a single GBR bearer. The universal set of bearers may comprise, per service type of the traffic to be transmitted, a single non-GBR bearer and a single GBR bearer. The use of only a single non-GBR bearer and a single GBR bearer in the universal set of bearers (whether in total, or per-service) may be advantageous as it simplifies the mapping of traffic type to bearer in the time period between when the UE first synchronizes with a target cell and when the UE is later reconfigured by the target cell. This reduces the amount of processing to be performed by the UE and target cell.

Such a use of such a preconfigured set of universal bearers results in the keeping of a DRB configuration static from a target cell perspective, and passes the responsibility for the alignment of any final DRB configuration to target cell after handover.

The use of such a preconfigured set of universal bearers may affect the configuration of the UE and access nodes in a plurality of different ways.

For example, the UE may be configured to use the preconfigured set of universal bearers (also referred to herein as a universal DRB configuration) during selective activation. Selective activation is a 3GPP Rel-18 enhancement to conditional mobility operations in which the conditional mobility configuration provided to the UE for determining when a conditional mobility event is to be performed remains valid and is kept for user by the UE after mobility execution. The UE may use the same conditional mobility configuration for assessing whether to perform multiple (e.g., a subsequent and/or consecutive) mobility procedures. In other words, the UE may monitor the same target cells, using the same conditional mobility evaluation criteria both before and after a mobility operation performed as a result of at least one of those conditional mobility evaluation criteria being fulfilled.

As another example, potential target cells may be requested for conditional mobility conditions based on the universal DRB configuration. The potential target access node(s) may subsequently decide whether or not the universal DRB configuration is allowed by the potential target cell, and informs the source cell about their decision. When a target access node agrees to use the universal DRB configuration, there is no need for the target access node to send the source access node the exact DRB configuration. Instead, the target access node and source access node may each assume that the agreement is for use of the universal non-GBR DRB and universal GBR DRB (where the universal GBR DRB may be configured even when there is no GBR DRB configured at this time).

Further, as the UE may be configured with the universal DRB configuration, there is no need for the UE to be provided with an exact DRB configuration as part the conditional mobility configuration when the use of the universal DRB configuration has been agreed. Instead, the UE may determine that the universal DRB configuration is to be used after mobility execution.

A general overview of the system will now be discussed, prior to some examples illustrating how the described principles may be implemented in different scenarios.

As discussed above, in prior systems, a source access node configures a UE with an initial bearer configuration for communicating traffic from the UE to the network. When the UE performs a conditional mobility operation to communicate (e.g., transmit and/or receive) traffic from a target cell instead, the UE may (after performing synchronization with the target cell), use the initial bearer configuration for communicating traffic between the UE and the target cell. If, prior to the conditional mobility operation being performed, the source access node determines that a different bearer configuration is to be used for communicating traffic to and/or from the UE and the network, the source access node may negotiate this updated bearer configuration with the target cell(s) and provide the different bearer configuration to the UE. The UE will subsequently use the updated bearer configuration to communicate with the source access node pre-conditional mobility event and with the target cell post-conditional mobility event.

In contrast to that prior system, the following proposes a use of a so-called "universal" DRB configuration in addition to, or in the alternative to, the initial bearer configuration. This universal DRB configuration may have a reduced number of bearers relative to the initial bearer configuration (e.g., a single GBR bearer for GBR traffic and a single non-GBR bearer for non-GBR traffic).

Therefore, in the presently described system, whenever the source access node changes the DRB configuration of the UE to another DRB configuration (e.g., during a selective activation evaluation phase), the source access node may inform all potential target access nodes about this fact without any renegotiating of DRB configurations. This is because the target cell(s) are already aware of whether or not the UE may use a universal DRB configuration and can prepare to communicate traffic according to the universal DRB configuration without further negotiation.

In the example in which UE is configured with both the initial bearer configuration and the universal bearer configuration as part of the conditional mobility operation, the UE may use the initial bearer configuration to communicate traffic as per the prior system *unless* a change in the initial bearer configuration is determined prior to the UE synchronizing with a target cell.

When a change in the initial bearer configuration is determined prior to the UE synchronizing with a target cell (e.g., when the UE is reconfigured to communicate traffic to and/or from the source node using a reconfigured bearer set), the UE may determine to use the universal bearer configuration for communicating traffic with a target cell after the UE synchronizes with that target cell instead of the initial bearer set and/or the reconfigured bearer set.

In one example, the UE may determine to use the universal bearer configuration whenever any change in the initial bearer configuration is determined.

In another example, the UE may determine to use the universal bearer configuration only when the UE determines that the change from the initial bearer configuration to the reconfigured bearer configuration is "destructive". Ways in which the UE may determine that the reconfiguration is "destructive" are outlined below.

In the example in which the UE is configured with only the universal bearer configuration as part of the conditional mobility operation, the UE simply uses the universal bearer configuration after the UE synchronizes with a target cell for communicating traffic with the target cell.

In both of these examples, the target cell may subsequently renegotiate a bearer configuration for use in communicating traffic with the UE (e.g., after the UE has initially communicated with the target cell using the universal bearer configuration).

Further, both of these examples may be provided at a per-cell level. For example, a conditional mobility configuration may comprise:
- A first conditional mobility configuration for a first target cell, the first conditional mobility configuration comprising an indication of a universal bearer configuration (which may comprise a configuration of the universal bearer configuration itself or a reference to a universal bearer configuration known to already be stored at the UE); and/or
- A second conditional mobility configuration for a second target cell, the second conditional mobility configuration comprising an indication of a universal bearer configuration and an initial bearer configuration. This universal bearer configuration of the second target cell may be the same universal bearer configuration of the first target cell. This universal bearer configuration of the second target cell may be different to the universal bearer configuration of the first target cell. The provision of both a universal bearer configuration and an initial bearer configuration allows a UE to resign from using universal configuration during a transient phase after handover to the second target cell has been executed either when there was no any changes in DRB configuration during evaluation phase at the source cell side, and/or when any DRB configuration change was determined to be non-destructive; and/or
- A third conditional mobility configuration for a third target cell, the third conditional mobility configuration comprising the initial bearer configuration.

For example, the conditional mobility configuration may comprise the first conditional mobility configuration and third conditional mobility configuration for respective target cells. The conditional mobility configuration may further comprise a fourth conditional mobility configuration for a fourth target cell, the fourth conditional mobility configuration comprising an indication of a universal bearer configuration. This universal bearer configuration of the fourth target cell may be the same universal bearer configuration of the first target cell. This universal bearer configuration of the fourth target cell may be different to the universal bearer configuration of the first target cell. In other words, there may be provided cell-specific conditional mobility configurations for a plurality of cells, in which each cell is respectively assigned to use a universal conditional mobility configuration or an initial conditional mobility configuration that is used for communications between the source access node and the UE.

Once the UE appears in some target cell, the UE may determine to start using the universal DRB configuration. For example, the UE may start sending traffic related to all configured non-GBR DRBs over the configured universal non-GBR DRB(s). Traffic related to all configured GBRs may be sent using the configured universal GBR DRB.

To achieve this, the UE may autonomously change configured QoS Flow to DRB mapping in such a way that QoS Flow to DRB mapping rules related to all configured non-GBR DRBs are removed. Moreover, for all configured GBR DRBs, the UE may create QoS Flow to DRB mapping rules that point to use of the universal GBR DRB. As this use of universal bearer behaviour is known by the chosen target cell, such use will not create any problem, especially as each target cells knows actual DRB configuration of the UE from before mobility execution. It is understood that having a universal GBR configuration without any GBR established has no impact on the system as when there is no data going through the bearer. This is because the universal GBR configuration is simply removed by the target cell.

The target cell behaves in an analogous manner towards the UE with respect to the use of the universal non-GBR DRBs and/or universal GBR DRBs. In particular, all the traffic related to non-GBR DRBs transmitted and/or received by the target cell may go through universal non-GBR DRB(s) of the universal DRB configuration, and all the traffic related to GBR DRBs transmitted and/or received by the target cell may go through universal GBR DBR(s) of the universal DRB configuration. Similar to the UE side, this may be achieved by the use of QoS Flow to DRB mapping rules.

In both the uplink and downlink directions, it may be assumed that service data adaptation protocol (SDAP) packet data units (PDUs) are prepared such that universal non-GBR DRB transmissions and universal GBR DRB transmissions may use SDAP headers. Such headers may be added by the transmitting side when the headers have not been used prior to the execution phase.

Data forwarding may be performed in a special way. Strictly speaking, after path switch, forwarded data may be re-directed to a universal non-GBRDRB and a universal GBR DRB (e.g., such that a universal DRB configuration is used for transmitting data). Further, any packet data convergence protocol (PDCP) COUNT may be reset.

Once data forwarding activities are done (e.g., when both the UE and the new serving cell are using the universal DRB configuration for signalling user data therebetween), the target cell may re-configure the UE to a different DRB configuration. The different DRB configuration may be determined in dependence on a UE configuration prior to the execution phase, and the capabilities of the UE and/or target cell. This reconfiguration may be performed using RRC reconfiguration signalling that causes on-the-fly changes of the QoS Flow to DRB mapping at the UE and/or target cell.

As mentioned above, as an extension, the UE may be provided with both universal and regular (e.g., prior system) DRB configurations. Whenever the DRB configuration does not change during conditional mobility evaluation phase (with the UE, source and all target cells being aware about that), the regular bearer configuration may be used right-away. In this case, there is no need to handle data forwarding in a special way and there is no need for additional UE's re-configuration after mobility execution.

Further to this, the regular configuration may be used whenever DRB configuration change during evaluation phase has not created any potentially destructive discrepancy between the regular configuration and the new configuration. In other words, neither the additional DRB nor a new QoS Flow has been added to UE configuration.

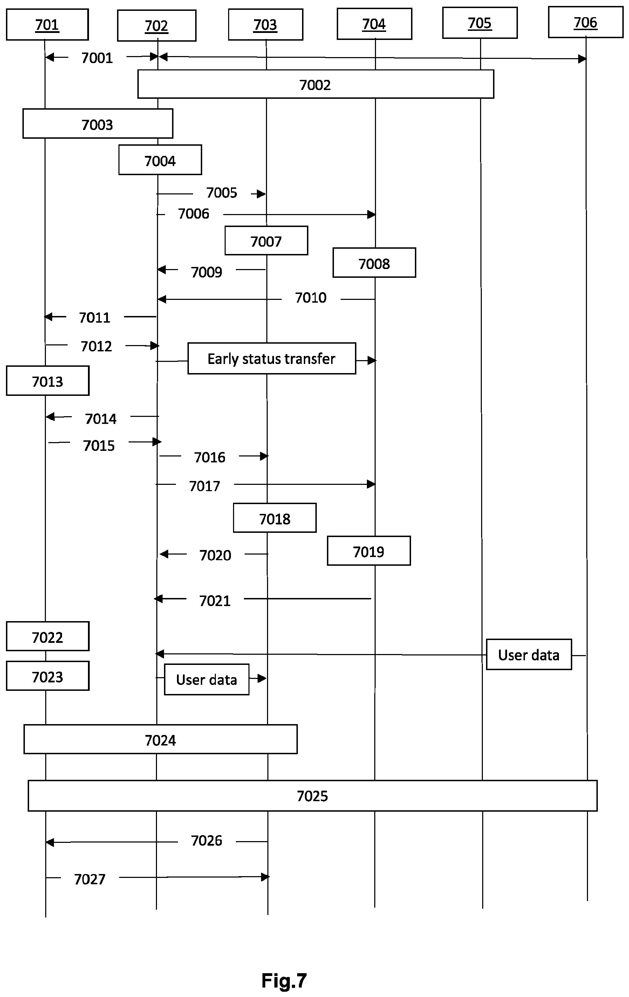

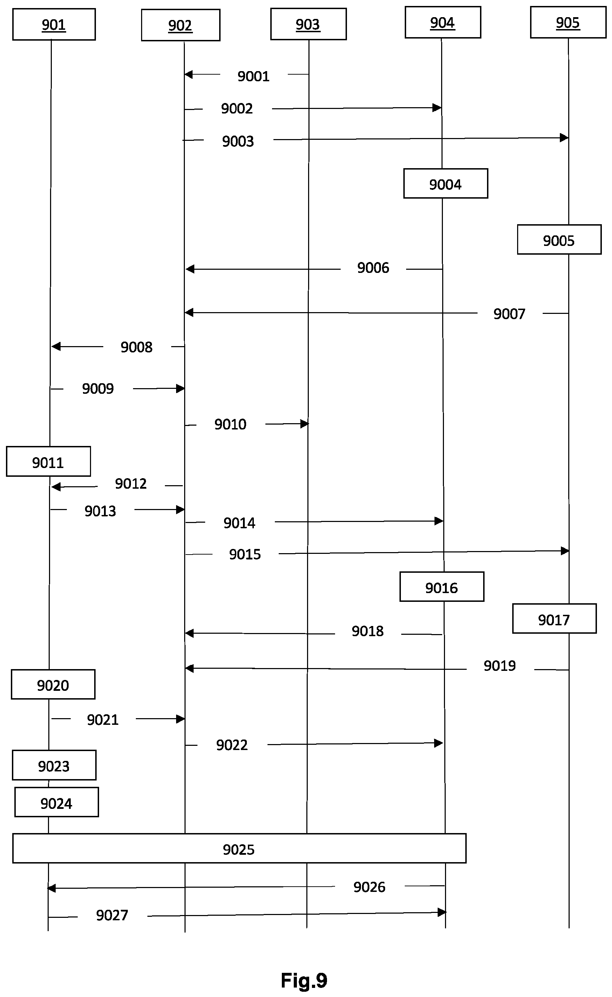

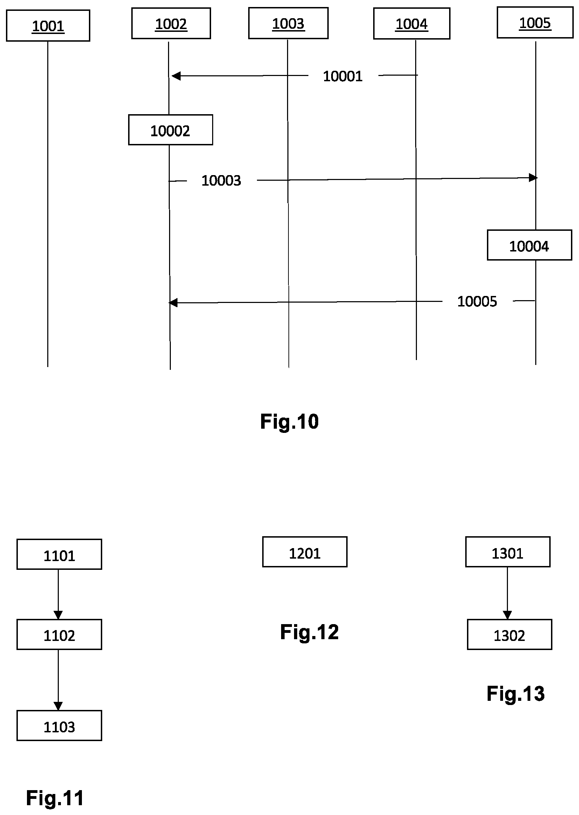

The presently described principles are illustrated with respect to Figure 7 to 10, which show how these principles may be implemented in different systems. Figures 7 and 8 relate to a conditional handover signalling example. Figures 9 and 10 relate to the CPA and/or CPC signalling example.

As an aside, it is noted that both of these examples make reference to the Packet Data Convergence Protocol (PDCP) in places. PDCP is a protocol used in order to maintain delivery of data packets in order. In case of data forwarding, this means that a target cell processes forwarded packets with assigned PDCP sequence numbers (SNs) first, before processing forwarded packets without assigned PDCP SNs. In the end, the target cell starts to process new packets after path switch. The following proposed examples imply that data "re-direction" for using the described universal DRB configuration may take care about in-order delivery in such a way that it keeps the order of PDCP PDUs related to each DRB being in use before synchronizing to new a new cell and/or access point. Mixing of PDCP PDUs from different DRBs is allowed, where PDCP COUNTs of universal non-GBR DRB and universal GBR DRB may be reset.

It is understood that other protocols for achieving analogous sequencing of delivered data packets may be used instead of PDCP.

Figure 7 illustrates signalling that may be performed between a UE 701, a source access node 702, a first target access node 703, a second target access node 704, an AMF 705, and a UPF 706.

During 7001, the UE 701, source access node 702, and UPF 706 establish an RRC connection for communicating user data.

During 7002, the source access node 702 obtains mobility control information for the UE 701 from the AMF 705.

During 7003, the source access node 702 provides the UE 701 with a measurement control and report configuration. This configures the UE 701 to provide measurement reporting to the source access node 702 according to configuration parameters. Measurement reports may be provided during 7003.

During 7004, the source access node 702 makes a decision on CHO based on the measurement report(s) received according to the configuration of 7003, and chooses potential handover target access nodes (in the present case, the handover target access nodes are illustrated as being the first and second target access nodes, although it is understood that there may be up to 8 target access nodes under current 3GPP definitions). In particular, the source access node may determine whether to request CHO based on (among others, UE configuration shall be populated) and whether or not to explicitly request that the UE and target cells communicate using a universal DRB configuration. This request may be signalled to the first and/or second target access nodes in any of a plurality of different ways during 7005 and 7006. For example, the signalling of each of 7005 and 7006 may comprise a respective (and optional) boolean information element that, when not present, indicates that a previous handover request is to be performed and, when present, indicates that the universal DRB configuration is to be used).

During 7005, the source access node 702 signals a handover request to the first target access node 703 for requesting CHO information from the first target access node 703.

During 7006, the source access node 702 signals a handover request to the second target access node 704 for requesting CHO information from the second target access node 704.

During 7007, the first target access node 703 makes a decision on whether or not to admit the UE 701, and makes a list of candidate target cell(s) managed by the first target access node 703 for admitting the UE 701. This list of candidate target cell(s) may be based on a received list of suggested cell(s) received from the source access node 702 during 7005. The first target access node 703 may determine whether UE admission is possible and whether it is possible to handle universal DRB configuration for that UE admission. This determination regarding whether it is possible for the UE to use a universal DRB configuration for conditional mobility events may be based on an indication previously received from the UE 701 (e.g., when the UE signals its capabilities to the network, such as during registration of the UE with the network).

During 7008, the second target access node 704 makes a decision on whether or not to admit the UE 701, and makes a list of candidate target cell(s) managed by the second target access node 704 for admitting the UE 701. This list of candidate target cell(s) may be based on a received list of suggested cell(s) received from the source access node 702 during 7006. The second target access node 704 may determine whether UE admission is possible and whether it is possible to handle universal DRB configuration for that UE admission.

During 7009, the first target access node 703 signals the source access node 702. This signalling may comprise a conditional handover configuration for the list of candidate target cell(s) prepared during 7007. This signalling may be comprised in a handover request acknowledgement.

The signalling of 7009 may take any of a plurality of different forms to indicate different responses of the first target access node. For example, the signalling of 7009 may comprise any of:
- an indication that, for at least one cell managed by the first target access node, that at least one cell is authorised for use for handover and for the use of a universal DRB configuration;
- an indication that, for at least one cell managed by the first target access node, that at least one cell is authorised for use for handover and is not authorized for the use of a universal DRB configuration; and/or
- an indication that, for at least one cell managed by the first target access node, that at least one cell is not authorised for use for handover and is not authorised for the use of a universal DRB configuration.

In this last case, this may be signalled using legacy signalling and processed by the source access node in a legacy way.

Therefore, during 7009, the first target access node 703 may signal either an indication that a universal DRB configuration is to be used post-handover (e.g., in the present case, the signalling of 7009 may comprise an indication that the universal DRB configuration (e.g., the set of the preconfigured universal non-GBR DRB(s) and the preconfigured universal GBR DRB(s)) are to be used) and/or an alternate DRB configuration is to be used. For example, the signalling of 7009 may comprise an explicit indication on whether or not use of the universal DRB configuration is accepted (e.g. through an optional boolean information element, where 'not present' indicates that a presently provided configuration is to be used while "present" indicates that the universal configuration is to be used).

During 7010, the second target access node 704 signals the source access node 702. This signalling may comprise a conditional handover configuration for the list of candidate target cell(s) prepared during 7008. This signalling may be comprised in a handover request acknowledgement.

The signalling of 7010 may take any of a plurality of different forms to indicate different responses of the first target access node. For example, the signalling of 7010 may comprise any of:
- an indication that, for at least one cell managed by the second target access node, that at least one cell is authorised for use for handover and for the use of a universal DRB configuration;
- an indication that, for at least one cell managed by the second target access node, that at least one cell is authorised for use for handover and is not authorized for the use of a universal DRB configuration; and/or
- an indication that, for at least one cell managed by the second target access node, that at least one cell is not authorised for use for handover and is not authorised for the use of a universal DRB configuration.

In this last case, this signalling of 7010 may be signalled using legacy signalling and processed by the source access node in a legacy way.

Therefore, during 7010, the second target access node 704 may signal either an indication that a universal DRB configuration is to be used post-handover (e.g., in the present case, the signalling of 7010 may comprise an indication that the universal DRB configuration (e.g., the set of the preconfigured universal non-GBR DRB(s) and the preconfigured universal GBR DRB(s)) are to be used) and/or an alternate DRB configuration is to be used. For example, the signalling of 7010 may comprise an explicit indication on whether or not use of the universal DRB configuration is accepted (e.g. through an optional boolean information element, where 'not present' indicates that a presently provided configuration is to be used while "present" indicates that the universal configuration is to be used).

During 7011, the source access node 702 signals the UE 701. This signalling may provide the UE with a configuration for CHO and handover execution conditions for implementing those CHO. It is understood that a handover execution condition for a specific target cell configuration may comprise a plurality of conditions to be fulfilled. This may be provided on a target cell-basis for the candidate target cell(s) information received during 7009 and 7010. This signalling may be provided in an RRCReconfiguration service operation.

The signalling of 7011 may explicitly indicate that a universal DRB configuration is to be used for at least one target cell. This may be signalled using, for example, an (optional) boolean information element in which 'not present' indicates that a regular configuration (provided in the signalling of 7011) is to be used, while "present" indicates that a universal DRB configuration is to be used. The universal DRB configuration to be used by the UE may be explicitly provided in the signalling of 7011 or may be implicitly provided by reference to a preconfigured configuration in the UE 701.

During 7012, the UE 701 signals the source access node 702. This signalling may confirm that the UE 701 has received the signalling of 7011.

During 7013, the UE 701 evaluates the execution conditions received during 7012 to determine whether any of them are currently fulfilled. 7013 may be repeated periodically until at least one execution condition has been fulfilled.

During 7014, the source access node 702 signals the UE 701. This signalling may comprise an indication that there has been a change in the DRB. This signalling may comprise an RRC reconfiguration signalling operation.

During 7015, the UE 701 signals the source access node 702. This signalling may indicate that the UE has applied the configuration received during 7014. This signalling may comprise an RRC reconfiguration complete service operation.

During 7016, the source access node 702 signals the first target access node 703. This signalling may request an update to the conditional mobility configuration previously received from the first target access node 703. This signalling may comprise a handover request update signalling operation. This handover request may be different to previous types of handover requests. This signalling may comprise information about the current UE configuration to the first target access node 703.

In other words, during 7016, the source access node informs potential targets that the DRB configuration has changed at the source side. Thanks to this signalling, the target cells are prepared for a subsequently requested UE admission (in other words, the target access nodes are aware of how to reconfigure the UE after handover in accordance with the pre-agreed universal DRB configuration. The target access nodes are also aware of how to handle data forwarding in respect of data meant for the UE 701).

During 7017, the source access node 702 signals the second target access node 704. This signalling may request an update to the conditional mobility configuration previously received from the second target access node 704. This signalling may comprise a handover request update signalling operation. This handover request may be different to previous types of handover requests. This signalling may comprise information about the current UE configuration to the second target access node 704.

During 7018, the first target access node 703 updates the conditional mobility configuration previously provided by the first target access node 703 for compatibility with the current UE configuration (e.g., as configured during 7014-7015).

During 7019, the second target access node 704 updates the conditional mobility configuration previously provided by the second target access node 704 for compatibility with the current UE configuration (e.g., as configured during 7014-7015). An effect of 7018 to 7019 is that it is unnecessary to re-negotiate any conditional handover configuration parameters as since all interested parties are aware that universal DRB configuration will be used after the UE 701 executes a conditional mobility procedure. A further decision on DRB configuration will be taken by the chosen target after execution (see below).

During 7020, the first target access node 703 acknowledges the handover request of 7016. This signalling may simply indicate that the first target access node 703 has applied the universal DRB configuration, and therefore does not comprise any updated DRB configuration applied by the first target access node 703.

During 7021, the second target access node 704 acknowledges the handover request of 7017. This signalling may simply indicate that the second target access node 704 has applied the universal DRB configuration, and therefore does not comprise any updated DRB configuration applied by the second target access node 703.

As an extension to each of 7020 and 7021, as long as the DRB configuration is not changed during the evaluation phase (e.g., between 7013 and 7022), the regular DRB configuration is assumed to be used by candidate target access nodes and the UE following a mobility event. The regular DRB configuration may further be determined to be used whenever a DRB configuration change is determined to be not potentially destructive (e.g., either no new DRB is added or no new QoS Flow is added).

During 7022, the UE 701, having determined that at least one execution condition for a target cell has been fulfilled with respect to a target cell prepared by the first target access node, determines that handover is to be performed to that target cell and detaches from the serving cell provided by the source access node.

During 7023, the UE 701 synchronises to the new cell (provided by the first target access node 703 in the present example) using the universal DRB configuration for both the uplink and downlink directions.

This synchronisation may be performed using a Random Access procedure.

In general, the UE and first target access node may initiate communications using the universal DRB configuration in both the uplink and downlink directions. This configured universal non-GBR DRB(s) in the universal DRB configuration (also referred to herein as a default bearer) may be used for sending data related to previously configured non-GBR DRBs. The configured universal GBR DRB(s) in the universal DRB configuration may be used for sending data related to previously configured GBR DRBs. If there were no previously configured GBR DRBs, the universal GBR DRB(s) may stay unused). This may be performed using an appropriate QoS Flow to DRB mapping. QoS Flow to DRB mapping rules related to non-GBR bearers may be removed, while QoS Flow to DRB mapping rules for any GBR DRB(s) may be remapped to point to universal GBR DRB(s). The guaranteed bit rate may be set to the sum of guaranteed bit rates of previously existing GBR DRBs.

As a possible extension to this, as long as DRB configuration is not changed during evaluation phase (e.g., during 7013 to 7021), the previous/regular DRB configuration may be used by the first target access point and the UE instead of the universal DRB configurations. In particular, the previous/regular DRB configuration may be used whenever the DRB configuration change is determined to not have been potentially destructive (e.g., either no new DRB is added or no new QoS Flow has been added).

During 7024, the UE 701 and first target access node 703 complete a CHO using the universal DRB configuration. This may be performed as illustrated with respect to Figure 8. The operations of Figure 8 illustrate operations that may be performed to complete CHO using the universal DRB configuration.

Figure 8 illustrates signalling that may be performed between a UE 801, a source access node 802, a first target access node 803, and a second access node 804. These apparatus and/or entities may correspond to those entities of Figure 7 comprising the same name.

During 8001, the first target access node 803 signals the source access node 802. This signalling may indicate that a handover of the UE 801 to a target cell provided by the target gNB has been performed. This signalling may comprise a handover complete (update) service operation. This signalling may comprise information about a configuration (e.g., a DRB configuration and/or a GBR configuration) that has been decided for use between the first target access node 803 and the UE 801 following the completion of the handover of the UE 801 to the first target access node 803.

During 8002, the source access node 802 stores the configuration received during 8001.

During 8003, the source access node 802 signals the second target access node 804. This signalling may provide the configuration stored during 8002 to the second target access node 804. This signalling may comprise a handover request (update) service operation. This can be useful as the second target access node 804 is kept aware of the UE's current DRB configuration in case a subsequent mobility operation is performed using the same (e.g., previously defined) execution criteria and prepared cell(s).

During 8004, the second target access node 804 stores the configuration received during 8003 when the second target access node 804 determines that its previously prepared target cells are allowed to use the configuration stored during 8002 for subsequent CHO operations. When the second target access node 804 determines that its previously prepared target cells are not allowed to use this configuration, the second target access node may not store the configuration received during 8003, and may (during 8005) signal a withdrawal of the second target access node from the original CHO agreement. For the present example, the first example is assumed.

During 8005, the second target access node 804 signals the source access node 802. This signalling may acknowledge the signalling of 8003. This signalling may comprise a handover request acknowledge service operation. This signalling may indicate that the second target access node 804 will allow its previously prepared target cells to use the configuration stored during 8002.

During 7025, path switch is performed (e.g., so that user plane data for the UE 701 is passed to the UE 701 via the first target access bide 703 instead of via the source access node 702, and the source access node 702 releases any UE context for the UE 701 stored at the source access node 702.

In more detail, data forwarding (also early data forwarding) of user data for the UE 701 from the source access node 702 to the first and/or second target access nodes may be performed up to the moment when UE synchronizes to chosen candidate target access point(s). Forwarded packets may be "re-directed" to use universal DRB configuration. SDAP headers may be added to allow for identification at receiver side, and the PDCP COUNT may be reset.

As an extension to this, as long as the DRB configuration is not changed during evaluation phase, regular DRB configuration may be assumed (and used) for communications between the first target access node and the UE. This would result in no changes in data forwarding behavior compared to the legacy case.

As a further extension, the regular DRB configuration may be used whenever DRB configuration change is determined as not being potentially destructive (e.g., either no new DRB is added or no new QoS Flow is added). This means that data forwarding may be handled in a special way (e.g., by changing the SDAP headers) solely in case of QoS Flow to DRB mapping changes.

Whether or not the DRB configuration change is determined as being potentially destructive may be determined by at least one of a current serving cell and the UE. Whether or not the DRB configuration change is determined as being potentially destructive may be determined in any of a plurality of different ways, with the assessment being associated with at least one criteria. As an example, a DRB configuration change may be determined as being destructive whenever that change would result in some additional resources being used at the target cell and/or target access node that is additional to the resources that were known to be used during the mobility preparation phase (e.g., when the UE's configuration for conditional mobility was determined).

When the criteria used for making this determination is the same at both the current serving cell and the UE ( e.g., as in the present example), the UE and current serving cell do not even need to communicate regarding the change in DRB configuration to the universal DRB configuration. Moreover, all potential targets may also be made aware about the change in DRB configuration as each change at the source side is communicated to them. In other words, all interested parties know whether or not there have been any changes in DRB configuration at the UE side, and whether they are destructive or not. When the change and/or removal of a DRB is determined to not be destructive, the regular/original DRB configuration may be used instead of switching to universal DRB one.

During 7026, the first target access node 703 signals the UE 701. This signalling may be performed after the first target access node 703 and the UE have used the universal DRB configuration. This signalling may configure the UE with a new DRB configuration for use in communicating between the UE 701 and the first target access node 703. This signalling may be performed using an RRC Reconfiguration service operation.

During 7027, the UE 701 signals the first target access node 703. This signalling may indicate that the UE has configured itself to apply the new DRB configuration signalled during 7026. At this stage, the UE, source access node, first target access node (e.g., new source/serving access node), and the second target access node are aligned with regards to DRB configuration of the UE. The process may consequently revert back to 7013. The UE may retain the universal DRB configuration in the event that a later network change occurs while the "new" DRB configuration is being used.

As mentioned above, Figures 9 and 10 relate to an example CPC/CPA procedure. This example relates to an SN-initiated variant. However, it is understood that this is merely an example, and that similar signalling and procedures may be performed in respect of MN-initiated CPC and/or CPA procedures.

Figure 9 illustrates signalling exchanged between a UE 901, a master access node (MN) 902 providing a PCell to UE 901, a source secondary access node (source SN) 903 providing an SCell of the MCG, a first target SN 904, and a second target SN 905.

The example signalling of Figure 9 relates to an SN-initiated inter-SN CPA/CPC procedure, which is described in section 10.5.2 of 3GPP TS 37.340. However, it is understood that other signalling may be performed for effecting CPA/CPC. For example, MN-initiated inter-SN may be performed in which CPA and/or CPC is triggered by an MN instead. This MN-initiated case differs from the SN-initiated case in that the MN is the entity that takes mobility decision based on measurements delivered by UE and decides on potential target SN cells.

During 9001, the source SN 903 signals the MN 902. This signalling may request that an SN change is requested. This signalling may be performed after the source SN 903 has determine that a cell change is to be performed by the UE 901 (e.g., based on measurement information received by the source SN 903 from the UE 901). The signalling may comprise respective indications of at least one potential mobility target (e.g., the first target SN 904 and the second target SN 905 in the present example). The signalling may comprise the respective indications in the form of a list of PSCell(s) prepared by each of the first and second target SNs. This list may comprise, for each of the PSCell(s) in the list, at least one respective execution condition for when that PSCell is to be switched to by the UE 901. This signalling to cause the MN 902 to determine whether the use of a universal DRB configuration is to be requested.

During 9002, the MN 902 signals the first target SN 904. This signalling may comprise an SN addition request. For example, this signalling may comprise a CPA request and/or a CPC request. This signalling may comprise an indication of the PSCell(s) managed by the first target SN 904 that are comprised in the list of 9001. This signalling may request (when so determined) the use of the universal DRB configuration. This use may be indicated using, for example, a binary indication that, when present, indicates that the universal DRB configuration is to be used.

During 9003, the MN 902 signals the second target SN 905. This signalling may comprise an SN addition request. For example, this signalling may comprise a CPA request and/or a CPC request. This signalling may comprise an indication of the PSCell(s) managed by the second target SN 905 that are comprised in the list of 9001. This signalling may request (when so determined) the use of the universal DRB configuration. This use may be indicated using, for example, a binary indication that, when present, indicates that the universal DRB configuration is to be used.

During 9004, the first target SN 904 determines whether or not to admit the UE 901, and, if the decision is positive, determines a list of candidate target PSCell(s) based on the list received during 9002, and whether or not each of those candidate cells is able to communicate according to the universal DRB configuration.

During 9005, the second target SN 905 determines whether or not to admit the UE 901, and, if the decision is positive, determines a list of candidate target PSCell(s) based on the list received during 9003, and whether or not each of those candidate cells is able to communicate according to the universal DRB configuration.

During 9006, the first target SN 904 signals the MN 902. This signalling may comprise an acknowledgement of the CPC and/or CPA request of 9002. This signalling may comprise, when use of the universal DRB configuration is not possible, respective conditional configuration for each PSCell prepared by the first target SN 904, along with respective identifier(s) of the prepared PSCell(s). This signalling may comprise, when use of the universal DRB configuration is possible, a simple indication that the universal DRB configuration is to be used (e.g., no configuration is signalled during 9006 in this example).

During 9007, the second target SN 905 signals the MN 902. This signalling may comprise an acknowledgement of the CPC and/or CPA request of 9003. This signalling may comprise respective conditional configuration for each PSCell prepared by the first target SN 904, along with respective identifier(s) of the prepared PSCell(s). This signalling may comprise, when use of the universal DRB configuration is not possible, respective conditional configuration for each PSCell prepared by the second target SN 905, along with respective identifier(s) of the prepared PSCell(s). This signalling may comprise, when use of the universal DRB configuration is possible, a simple indication that the universal DRB configuration is to be used (e.g., no configuration is signalled during 9007 in this example).

During 9008, the MN 902 signals the UE 901. This signalling may comprise an RRC reconfiguration. The RRC reconfiguration may comprise a configuration for configuring the UE 901 with CPC configurations and execution conditions on a target cell-basis when use of the universal DRB is not possible. The RRC reconfiguration may comprise a simple indication that the universal DRB configuration is to be used when use of the DRB is possible (e.g. through optional boolean information element, where 'not present' means regular DRB configuration is to be used while "present" means that the universal DRB configuration is to be used).

During 9009, the UE 901 signals the MN 902. This signalling may indicate that UE has applied the reconfiguration received during 9008. For example, this signalling may comprise an RRC reconfiguration complete signalling operation.

During 9010, the MN 902 signals the source SN 903. This signalling may confirm, to the source SN 903, that the UE has been provided with reconfiguration information for a conditional change operation.

During 9011, the UE 901 evaluates the CPA and/or CPC conditions received during 9008 to determine whether any execution condition associated with a CPA and/or CPC configuration received during 9008.

During 9012, the MN 902 signals the UE 901. This signalling may comprise an indication that there has been a change in the DRB. This signalling may comprise an RRC reconfiguration signalling operation.

During 9013, the UE 901 signals the MN 902. This signalling may indicate that the UE has applied the configuration received during 9012. This signalling may comprise an RRC reconfiguration complete service operation.

During 9014, the MN 902 signals the first target SN 904. This signalling may request an update to the conditional mobility configuration previously received from the first target SN 904. This signalling may comprise a mobility request update signalling operation. This mobility request may be different to previous types of mobility requests. This signalling may comprise information about the current UE configuration to the first target SN 904.

During 9015, the MN 902 signals the second target SN 905. This signalling may request an update to the conditional mobility configuration previously received from the second target SN 905. This signalling may comprise a handover request update signalling operation. This handover request may be different to previous types of handover requests. This signalling may comprise information about the current UE configuration to the second target SN 905.

During 9016, the first target SN 904 updates the conditional mobility configuration previously provided by the first target SN 904 for compatibility with the current UE configuration (e.g., as configured during 9014-9015).

During 9017, the second target SN 905 updates the conditional mobility configuration previously provided by the second target SN 905 for compatibility with the current UE configuration (e.g., as configured during 9014-9015).

During 9018, the first target SN 904 acknowledges the handover request of 9016. This signalling may simply indicate that the first target SN 904 has applied the universal DRB configuration, and therefore does not comprise any updated configuration applied by the first target SN 904.

During 9019, the second target SN 905 acknowledges the handover request of 9017. This signalling may simply indicate that the second target SN 905 has applied the universal DRB configuration, and therefore does not comprise any updated configuration applied by the second target SN 905.

As an extension to each of 9018 and 9019, as long as the DRB configuration is not changed during the evaluation phase (e.g., between 9011 and 9019), the regular DRB configuration is assumed to be used by candidate target access nodes and the UE following a mobility event. The regular DRB configuration may further be determined to be used whenever a DRB configuration change is determined to be not potentially destructive (e.g., either no new DRB is added or no new QoS Flow is added).

During 9020, the UE 901, having determined that at least one execution condition for a target cell has been fulfilled with respect to a target cell prepared by the first target SN 904, determines that handover is to be performed to that target cell.

During 9021, the UE 901 signals the MN 902. This signalling may indicate that an RRC reconfiguration has been performed by the UE 901. This signalling may be performed using an RRC reconfiguration complete signalling operation.

During 9022, the MN 902 signals the first target SN 904. This signalling may comprise an SN RRC reconfiguration complete signalling operation.

During 9023, the UE 901 detaches from the serving cell provided by the source SN 903.

During 9024, the UE 901 synchronises to the new cell (provided by the first target access node 903 in the present example) using the universal DRB configuration for both the uplink and downlink conditions.

This synchronisation may be performed using a Random Access procedure.

In general, the UE and first target SN may initiate communications using the universal DRB configuration in both the uplink and downlink directions. The configured universal non-GBR DRB part of this universal DRB configuration may be used for sending data related to previously configured non-GBR DRB(s). The configured universal GBR DBR of this universal DRB configuration may be used for sending data related to previously configured GBR DRB(s). If there were not any GBR DRBs, the universal GBR DBR stays unused. This may be performed using an appropriate QoS Flow to DRB mapping. QoS Flow to DRB mapping rules related to non-GBR bearers may be removed, while QoSFlow to DRB mapping rules for GBR DRBs may point to the universal GBR DRB(s). Guaranteed bit rate may be set to the sum of guaranteed bit rates of previously existing GBR DRBs.

As a possible extension to this, as long as DRB configuration is not changed during evaluation phase (e.g., during 9011 to 9019), the previous/regular DRB configuration may be used by the first target SN and the UE instead of the universal DRB configurations. In particular, the previous/regular DRB configuration may be used whenever the DRB configuration change is determined to not have been potentially destructive (e.g., either no new DRB is added or no new QoS Flow has been added).

During 9025, the UE 901 and first target SN 904 complete a CHO using the universal DRB configuration. This may be performed as illustrated with respect to Figure 10.

Figure 10 illustrates signalling that may be performed between a UE 1001, an MN 1002, a source SN 1003, a first target SN 1004, and a second target SN 1005. These apparatus and/or entities may correspond to those entities of Figure 9 comprising the same name.

During 10001, the first target SN 1004 signals the MN 1002. This signalling may indicate that a handover of the UE 1001 to a target cell provided by the target gNB has been performed. This signalling may comprise an SN change request (update) service operation. This signalling may comprise information about a configuration (e.g., a DRB configuration and/or a GBR configuration) that has been decided for use between the first target SN 1004 and the UE 1001 following the completion of the handover of the UE 801 to the first target SN 1004.

During 10002, the MN 1002 stores the configuration received during 10001.

During 10003, the MN 1002 signals the second target SN 1005. This signalling may provide the configuration stored during 10002 to the second target SN 1005. This signalling may comprise an SN addition request (update) service operation.

During 10004, the second target SN 1005 stores the configuration received during 10003.

During 10005, the second target SN 1005 signals the MN 1002. This signalling may acknowledge the signalling of 10003. This signalling may comprise an SN addition request acknowledge service operation.

During 9026, the first target SN 904 signals the UE 901. This signalling may be performed after the first target SN 904 and the UE have used the universal DRB configuration. This signalling may configure the UE with a new DRB configuration for use in communicating between the UE 901 and the first target SN 904. This signalling may be performed using an RRC Reconfiguration service operation.

During 9027, the UE 901 signals the first target SN 904. This signalling may indicate that the UE has configured itself to apply the new DRB configuration signalled during 9026. At this stage, the UE, source access node, first target access node (e.g., new source/serving access node), and the second target access node are aligned with regards to DRB configuration of the UE. The process may consequently revert back to 9011.

It is understood that the above examples are merely illustrative and not limiting, and may be applied to a variety of use cases.

For example, the presently described techniques may be applied to non-ultra reliable low latency communication (non-URLLC) cases. In such cases, the universal DRB configuration may never be requested when an URLLC Packet Data Unit (PDU) Session is present. Also, when a URLLC PDU session is established while the UE is evaluating whether a CHO execution condition has been fulfilled, the apparatuses may revert to performing legacy behaviour to ensure the URLLC are performed adequately.

It is also understood that the presently described techniques may be made more dynamic from a Radio Access Network (RAN) by enabling a source access node (e.g., a source gNB, a source MN, and/or a source SN) to request the cessation of use of the universal DRB configuration. Such entities may subsequently re-renegotiate a DRB configuration to be used by the UE and target access node(s) (e.g., as per legacy mechanisms).

Further, candidate target access nodes (e.g., a target gNB, SN, and/or MN) may be allowed to perform a universal to legacy behavior once informed about DRB configuration change at source access node side when the UE is evaluating handover conditions for conditional mobility operations. Such a target access node may be configured to signal a negative acknowledgement of such a change, along with a proposed reconfiguration.

In both of these cases, the UE may be re-configured with a new conditional configuration over RRC signalling operations.

Figures 11 to 13 illustrate operations that may be performed by apparatus described herein. These Figures illustrate features of the above-mentioned examples, and so correspondence may be found between the features of those examples and the presently described principles. The apparatus of Figures 11 to 13 may be configured to interact with each other. The apparatus of Figures 11 to 13 relate to a conditional mobility operation. This conditional mobility operation may be at least one of a conditional handover, a conditional cell change, and/or a conditional cell addition.

Figure 11 illustrates operations that may be performed by a user equipment.

During 1101, the UE may receive, from a source access node, a first radio resource control reconfiguration for configuring the user equipment to perform a conditional mobility operation with respect to at least one of a plurality of target cells, the first radio resource control reconfiguration comprising an indication of universal data bearer configuration and an indication that use of the universal data bearer configuration is allowed to be used for accessing any of the at least one of the plurality of target cells upon fulfilment of at least one execution condition, the universal data bearer configuration comprising a first universal data bearer configuration for non-guaranteed bit rate data and a second universal data bearer configuration for guaranteed bit rate data. The indication may comprise the full universal data bearer configuration. The indication may comprise a reference to a universal data bearer configuration previously stored and/or preconfigured at the UE. The universal data bearer configuration may be as described above (in one non-limiting example, comprising a single non-GBR universal data bearer and a single GBR universal data bearer, either on a global level, a service-type level, or on a target-cell level, depending on the implementation).

During 1102, the UE subsequently performs the conditional mobility operation by monitoring, for at least one of the plurality of target cells indicated in the first radio resource control reconfiguration, the at least one execution condition for determining whether to initiate access with the at least one of the plurality of target cells.

During 1103, the UE, while performing said monitoring, determines to use the universal data bearer configuration instead of an initial data bearer configuration after synchronising with a target access node. The initial data bearer configuration may be a data bearer configuration used for communications between the UE and the source access node.

The UE may determine that the at least one execution condition is fulfilled for a first target cell of said plurality of target cells, and access the first target cell using the universal data bearer configuration after synchronising with the first target cell.

Subsequent to the accessing, the UE may receive, from the first target cell, a subsequent data bearer configuration for communicating data between the user equipment and the at least one target cell, and signal to and/or from the first target cell using the subsequent data bearer configuration.

The determining to use the universal data bearer configuration may comprise determining that the initial data bearer configuration associated with the conditional mobility operation has been reconfigured to form a reconfigured initial data bearer configuration and determining to use the universal data bearer configuration in response to the reconfiguration to form the reconfigured initial data bearer configuration.

The determining to use the universal data bearer configuration may comprise determining that the initial data bearer configuration associated with the conditional mobility operation has been reconfigured to form a reconfigured initial data bearer, determining that the reconfigured initial data bearer configuration is destructive relative to the initial data bearer configuration, and determining to use the universal data bearer configuration in response to the determination that the reconfigured initial data bearer configuration is destructive.

Whether or not a DRB configuration change is determined to be destructive relates to whether or not there is likely to be an increase in network resources to be used at a target-cell side to fulfil current UE requirements. In particular, the target cell agreed the use of a certain number of DRBs and certain number of QoS Flows when the initial target cell configuration for enabling UE access was agreed. When the DRB configuration change is then changed at the source cell side, this implies that there will be a similar change in resources to be used on the target side compared to what the target cell initially agreed. An increase in resources is associated with a destructive change (e.g., an increase in DRB and/or QoS flow). A decrease in resources is associated with a non-destructive change (e.g., a decrease in the number of DRBs and/or QoS flow).

The UE may determine, while performing said monitoring, to abstain from using the universal data bearer configuration after synchronising with the at least one of the plurality of target cells, obtain a third data bearer configuration from the source access node for communicating with the at least one of the plurality of target cells, determine that the at least one execution condition is fulfilled for a first target cell of said plurality of target cells, and use the third data bearer configuration for communicating with the first target cell after synchronising with the first target cell.

The first radio resource control reconfiguration may comprise the initial data bearer configuration.

The determining to use the universal data bearer configuration instead of an initial data bearer configuration may comprise: autonomously removing an existing mapping between quality of service flows and bearers of the initial data bearer configuration; and autonomously remapping non-guaranteed bit rate quality of service flows of said quality of service flows to bearers of said first universal data bearer configuration and remapping guaranteed bit rate quality of service flows of said quality of service flows to bearers of said second universal data bearer configuration.

It is understood that there may be only one universal data bearer configuration per target cell. The UE may receive either the universal data bearer configuration, the initial data bearer configuration used for communications between the UE and the source (when the target cell cannot agree on the use of a universal data bearer configuration), or both of these configurations. In this latter case, the UE can decide on whether to use initial data bearer configuration or the universal one for communicating with a target cell after synchronizing with the target cell based on whether the initial configuration has changed at the source cell side during evaluation phase (either in response to any change or only in response to a destructive change being made).

The UE may add respective service data adaption protocol headers to packet data units transmitted according to at least one of the first universal data bearer configuration or the second universal data bearer configuration.

The UE may signal, to the at least one target access node, an indication for the at least one target node to use the universal data bearer configuration instead of an initial data bearer configuration.

Figure 12 illustrates operations that may be performed by a source access node. The source access node may be the source access node mentioned above in relation to Figure 11.

During 1201, the source access node signals, to a user equipment, a first radio resource control reconfiguration for configuring the user equipment to perform a conditional mobility operation with respect to at least one of a plurality of target cells, the first radio resource control reconfiguration comprising an indication of a universal data bearer configuration and an indication that use of the universal data bearer configuration is allowed to be used for accessing at least one of the plurality of target cells upon fulfilment of at least one execution condition, the universal data bearer configuration comprising a first universal data bearer configuration for non-guaranteed bit rate data and a second universal data bearer configuration for guaranteed bit rate data. The user equipment may be the user equipment mentioned above in relation to Figure 11. The universal data bearer configuration may be as described above (in one non-limiting example, comprising a single non-GBR universal data bearer and a single GBR universal data bearer, either on a global level, a service-type level, or on a target-cell level, depending on the implementation).

The source access node may determine, while the user equipment is evaluating whether to perform the conditional mobility operation, that the initial data bearer configuration is impacted by a change in network resources, and signal, to the at least one of the plurality of target cells of the conditional mobility operation, an indication for that user equipment will use the universal data bearer configuration instead of the initial data bearer configuration when the conditional mobility operation is performed.

The source access node may receive, from a first one of the at least one of the plurality of target cells, an indication that the user equipment is communicating with the first one of the target access cells for receiving services and a subsequent data bearer configuration used for communications between the user equipment and the first one of the target access cells, and provide the subsequent data bearer configuration to the remaining ones of the at least one of the plurality of target cells.

The source access node may receive, from the at least one of the plurality of target cells, a first withdrawal indication indicating that the at least one of the plurality of target cells will not use the universal data bearer configuration for communicating with the at least one of the plurality of target cells for the conditional mobility operation, and signal, to the user equipment, the first withdrawal indication.

The source access node may receive, from the user equipment, a second withdrawal indication indicating that the user equipment will not use the universal data bearer configuration for communications between the user equipment and the at least one of the plurality of target cells for the conditional mobility operation, and signal, to the at least one target access node, the second withdrawal indication.

The source access node may signal, to the at least one target access node, an indication for the at least one target node to use the universal data bearer configuration instead of an initial data bearer configuration.

Figure 13 illustrates operations that may be performed by a target access node. The target access node may provide and/or control at least one target cell. The target access node may be at least one of the target access nodes mentioned above in relation to any of Figures 11 and 12.

During 1301, the target access node receives, from the source access node, a request to allow use of a universal data bearer configuration for communicating traffic between a user equipment and at least one target cell provided by the target access node subsequent to a conditional mobility operation being performed by the user equipment to access the at least one target cell, the universal data bearer configuration comprising a first universal data bearer configuration for non-guaranteed bit rate data and a second universal data bearer configuration for guaranteed bit rate data. The source access node may be the source access node mentioned above in relation to any of Figures 11 and 12. The user equipment may be the user equipment mentioned above in relation to any of Figures 11 and 12. The universal data bearer configuration may be as described above (in one non-limiting example, comprising a single non-GBR universal data bearer and a single GBR universal data bearer, either on a global level, a service-type level, or on a target-cell level, depending on the implementation).

During 1302, the target access node signals, to the source access node, an indication of whether the at least one target cell is allowed to use the universal data bearer configuration.

The target access node may communicate with the user equipment using the universal data bearer configuration when the user equipment performs the mobility operation to access the at least one target cell.

The target access node may determine a subsequent data bearer configuration for signalling communications between the user equipment and the target access node after the communicating using the universal data bearer, and signal, to the source access node, an indication that the user equipment is communicating with the target access node for receiving services and the subsequent data bearer configuration.

The target access node may receive, from the source access node, an indication to use the universal data bearer configuration instead of an initial data bearer configuration, autonomously remove an existing mapping between quality of service flows and bearers of the initial data bearer configuration, and autonomously remap non-guaranteed bit rate quality of service flows of said quality of service flows to bearers of said first universal data bearer configuration and remapping guaranteed bit rate quality of service flows of said quality of service flows to bearers of said second universal data bearer configuration.

The target access node may add respective service data adaption protocol, SDAP, headers to packet data units transmitted according to at least one of the first universal data bearer configuration or the second universal data bearer configuration.

The target access node may receive, from the source access node, traffic for the user equipment, the traffic being associated with a respective one of a first bearer of the initial configuration and a second bearer of the initial configuration, and provide the traffic to the user equipment using at least one bearer of the universal data bearer configuration by: labelling traffic associated with the first bearer using a first sequence of numbers in the SDAP header to indicate a receive order of the traffic associated with the first bearer; labelling traffic associated with the second bearer using a second sequence of numbers in the SDAP header to indicate a receive order of the traffic associated with the second bearer; and signalling the labelled traffic to the user equipment using at least one bearer of the universal data bearer configuration.

When the indication of whether the at least one target cell is allowed to use the universal data bearer configuration indicates that the at least one target cell is allowed to use the universal data bearer configuration, the target access node may subsequently signal, to the source access node, an indication that the at least one target node will not use the universal data bearer configuration for communicating with the at least one target access node for the conditional mobility operation.

The indication of whether the at least one target cell is allowed to use the universal data bearer configuration may indicate that the at least one target cell is not allowed to use the universal data bearer configuration.

The presently described mechanisms have a plurality of advantages. For example, apparatus performing the described principles may make a network more efficient by reducing the overhead associated with reconfiguring apparatus during evaluation of mobility execution criteria by a UE.

Moreover, even if a source cell determines that UE is to be reconfigured several times while the UE is performing the execution condition evaluation, the final reconfiguration may be delayed such that it is applied after mobility execution to the new serving cell. Because of that, DRB configuration discrepancy between UE and target cell is avoided (target, new serving cell, can decide how to handle the UE), and a plurality of renegotiations with potential target cells can be avoided.

Further, as the presently described mechanisms enables a newly selected target cell to apply a final configuration after mobility execution, the situation in which a former serving cell (e.g., the source cell) was requested to change the conditional configuration at the UE side is avoided (e.g., a no renegotiation of resources is performed during the conditional mobility evaluation phase). This can be especially useful when the connection between the former serving cell and the UE has been already lost (e.g., when the UE has moved to a target cell, which becomes a new serving cell of the UE).

The foregoing description has provided by way of non-limiting examples a full and informative description of some examples. However, various modifications and adaptations may become apparent to those skilled in the relevant arts in view of the foregoing description, when read in conjunction with the accompanying drawings and the claims. However, all such and similar modifications of the teachings will still fall within the scope of the claims.

In the above, different examples are described using, as an example of an access architecture to which the described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

As provided herein, various aspects are described in the detailed description of examples and in the claims. In general, some examples may be implemented in hardware or special purpose circuits, software code, logic or any combination thereof. For example, some aspects may be implemented in hardware, while other aspects may be implemented in firmware or software code which may be executed by a controller, microprocessor or other computing device, although examples are not limited thereto. While various examples may be illustrated and described as block diagrams, flow charts, or using some other pictorial representation, it is well understood that these blocks, apparatus, systems, techniques or methods described herein may be implemented in, as non-limiting examples, hardware, software code, firmware code, special purpose circuits or logic, general purpose hardware or controller or other computing devices, or some combination thereof.

The examples may be implemented by computer software code stored in a memory and executable by at least one data processor of the involved entities or by hardware, or by a combination of software code and hardware.

The memory referred to herein may be of any type suitable to the local technical environment and may be implemented using any suitable data storage technology, such as semiconductor based memory devices, magnetic memory devices and systems, optical memory devices and systems, fixed memory and removable memory.

The (data) processors referred to herein may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Further in this regard it should be noted that any procedures, e.g., as in Figure 11 and/or Figure 12 and/or Figure 13, and/or otherwise described previously, may represent operations of a computer program being deployed by at least one processor comprised in an apparatus (where a computer program comprises instructions for causing an apparatus to perform at least one action, the instructions being represented as software code stored on at least one memory), or interconnected logic circuits, blocks and functions, or a combination of operations of a computer program being deployed by at least one processor comprised in an apparatus and logic circuits, blocks and functions. The software code may be stored on memory, such as physical media as memory chips, or memory blocks implemented within the processor, magnetic media (such as hard disk or floppy disks), and optical media (such as for example DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multicore processor architecture, as nonlimiting examples.

Additionally or alternatively, some examples may be implemented using circuitry. The circuitry may be configured to perform one or more of the functions and/or method steps previously described. That circuitry may be provided in the base station and/or in the communications device and/or in a core network entity.

As used in this application, the term "circuitry" may refer to one or more or all of the following:
(a) hardware-only circuit implementations (such as implementations in only analogue and/or digital circuitry);
(b) combinations of hardware circuits and software cade, such as:
   (i) a combination of analogue and/or digital hardware circuit(s) with software/firmware code and
   (ii) any portions of hardware processor(s) with software code (including digital signal processor(s)), software code, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software code (e.g., firmware) for operation, but the software code may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware code. The term circuitry also covers, for example integrated device.

Implementations of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The term "non-transitory," as used herein, is a limitation of the medium itself (i.e., tangible, not a signal) as opposed to a limitation on data storage persistency (e.g., RAM vs. ROM).

The scope of protection sought for various examples of the disclosure is set out by the independent claims. The examples and features, if any, described in this specification that do not fall under the scope of the independent claims are to be interpreted as examples useful for understanding the disclosure.

The foregoing description has provided by way of non-limiting examples a full and informative description of example implementations of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims.

## Claims

1. An apparatus for a user equipment (701), the apparatus comprising:
means for receiving, from a source access node (702), a first radio resource control reconfiguration for configuring the user equipment (701) to perform a conditional mobility operation with respect to at least one of a plurality of target cells, the first radio resource control reconfiguration comprising an indication of universal data bearer configuration and an indication that use of the universal data bearer configuration is allowed to be used for accessing any of the at least one of the plurality of target cells upon fulfilment of at least one execution condition, wherein the universal data bearer configuration comprises a first universal data bearer configuration for non-guaranteed bit rate data and a second universal data bearer configuration for guaranteed bit rate data;
means for subsequently performing the conditional mobility operation by monitoring, for at least one of the plurality of target cells indicated in the first radio resource control reconfiguration, the at least one execution condition for determining whether to initiate access with the at least one of the plurality of target cells; and
means for, while performing said monitoring, determining to use the universal data bearer configuration instead of an initial data bearer configuration after synchronising with a target access node (703, 704).

2. The apparatus as claimed in claim 1, the apparatus comprising:
means for determining that the at least one execution condition is fulfilled for a first target cell of said plurality of target cells; and
means for accessing the first target cell using the universal data bearer configuration after synchronising with the first target cell.

3. The apparatus as claimed in claim 2, the apparatus comprising, subsequent to the accessing:
means for receiving, from the first target cell, a subsequent data bearer configuration for communicating data between the user equipment and the at least one target cell; and
means for signalling to and/or from the first target cell using the subsequent data bearer configuration.

4. The apparatus as claimed in any of claims 2 to 3, wherein the means for determining to use the universal data bearer configuration comprises:
means for determining that the initial data bearer configuration associated with the conditional mobility operation has been reconfigured to form a reconfigured initial data bearer configuration; and
means for determining to use the universal data bearer configuration in response to the reconfiguration to form the reconfigured initial data bearer configuration.

5. The apparatus as claimed in any of claims 2 to 3, wherein the means for determining to use the universal data bearer configuration comprises:
means for determining that the initial data bearer configuration associated with the conditional mobility operation has been reconfigured to form a reconfigured initial data bearer;
means for determining that the reconfigured initial data bearer configuration is destructive relative to the initial data bearer configuration; and
means for determining to use the universal data bearer configuration in response to the determination that the reconfigured initial data bearer configuration is destructive.

6. The apparatus as claimed in claim 1, the apparatus comprising:
means for determining, while performing said monitoring, to abstain from using the universal data bearer configuration after synchronising with the at least one of the plurality of target cells;
means for obtaining a third data bearer configuration from the source access node for communicating with the at least one of the plurality of target cells;
means for determining that the at least one execution condition is fulfilled for a first target cell of said plurality of target cells; and
means for using the third data bearer configuration for communicating with the first target cell after synchronising with the first target cell.

7. The apparatus as claimed in any preceding claim, wherein the first radio resource control reconfiguration comprises the initial data bearer configuration.

8. The apparatus as claimed in any preceding claim, wherein the means for determining to use the universal data bearer configuration instead of an initial data bearer configuration comprises:
means for autonomously removing an existing mapping between quality of service flows and bearers of the initial data bearer configuration; and
means for autonomously remapping non-guaranteed bit rate quality of service flows of said quality of service flows to bearers of said first universal data bearer configuration and remapping guaranteed bit rate quality of service flows of said quality of service flows to bearers of said second universal data bearer configuration.

9. The apparatus as claimed in claim 8, the apparatus comprising means for adding respective service data adaption protocol headers to packet data units transmitted according to at least one of the first universal data bearer configuration or the second universal data bearer configuration.

10. An apparatus for a source access node (702), the apparatus comprising:
means for signalling, to a user equipment (701), a first radio resource control reconfiguration for configuring the user equipment to perform a conditional mobility operation with respect to at least one of a plurality of target cells, the first radio resource control reconfiguration comprising an indication of a universal data bearer configuration and an indication that use of the universal data bearer configuration is allowed to be used for accessing at least one of the plurality of target cells upon fulfilment of at least one execution condition, wherein the universal data bearer configuration comprises a first universal data bearer configuration for non-guaranteed bit rate data and a second universal data bearer configuration for guaranteed bit rate data.

11. An apparatus for a target access node (703, 704), the apparatus comprising:
means for receiving, from the source access node (702), a request to allow use of a universal data bearer configuration for communicating traffic between a user equipment (701) and at least one target cell provided by the target access node (703, 704) subsequent to a conditional mobility operation being performed by the user equipment (701) to access the at least one target cell, wherein the universal data bearer configuration comprises a first universal data bearer configuration for non-guaranteed bit rate data and a second universal data bearer configuration for guaranteed bit rate data; and
means for signalling, to the source access node (702), an indication of whether the at least one target cell is allowed to use the universal data bearer configuration.

12. A method performed by a user equipment (701), the method comprising:
receiving (1101), from a source access node (702), a first radio resource control reconfiguration for configuring the user equipment (701) to perform a conditional mobility operation with respect to at least one of a plurality of target cells, the first radio resource control reconfiguration comprising an indication of universal data bearer configuration and an indication that use of the universal data bearer configuration is allowed to be used for accessing any of the at least one of the plurality of target cells upon fulfilment of at least one execution condition, wherein the universal data bearer configuration comprises a first universal data bearer configuration for non-guaranteed bit rate data and a second universal data bearer configuration for guaranteed bit rate data;
subsequently performing the conditional mobility operation by monitoring (1102), for at least one of the plurality of target cells indicated in the first radio resource control reconfiguration, the at least one execution condition for determining whether to initiate access with the at least one of the plurality of target cells; and
while performing said monitoring, determining (1103) to use the universal data bearer configuration instead of an initial data bearer configuration after synchronising with a target access node (703, 704).

13. A computer program comprising instructions which, when executed by an apparatus for a user equipment (701), cause the apparatus to perform:
receiving (1101), from a source access node (702), a first radio resource control reconfiguration for configuring the user equipment (701) to perform a conditional mobility operation with respect to at least one of a plurality of target cells, the first radio resource control reconfiguration comprising an indication of universal data bearer configuration and an indication that use of the universal data bearer configuration is allowed to be used for accessing any of the at least one of the plurality of target cells upon fulfilment of at least one execution condition, wherein the universal data bearer configuration comprises a first universal data bearer configuration for non-guaranteed bit rate data and a second universal data bearer configuration for guaranteed bit rate data;
subsequently performing the conditional mobility operation by monitoring (1102), for at least one of the plurality of target cells indicated in the first radio resource control reconfiguration, the at least one execution condition for determining whether to initiate access with the at least one of the plurality of target cells; and
while performing said monitoring, determining (1103) to use the universal data bearer configuration instead of an initial data bearer configuration after synchronising with a target access node (703, 704).

## Patentansprüche

1. Einrichtung für eine Teilnehmereinrichtung (701), wobei die Einrichtung Folgendes umfasst:
Mittel zum Empfangen einer ersten Funkressourcensteuerungsneuauslegung zum Auslegen der Teilnehmereinrichtung (701) zum Durchführen einer bedingten Mobilitätsoperation mit Bezug auf eine von einer Vielzahl von Zielzellen von einem Quellzugriffsknoten (702), wobei die erste Funkressourcensteuerungsneuauslegung eine Anzeige einer universellen Datenträgerauslegung sowie eine Anzeige umfasst, dass eine Verwendung der universellen Datenträgerauslegung zum Verwenden zum Zugreifen auf eine der mindestens einen der Vielzahl von Zielzellen nach Erfüllung von mindestens einer Ausführungsbedingung erlaubt ist, wobei die universelle Datenträgerauslegung eine erste universelle Datenträgerauslegung für nicht garantierte Bitratendaten und eine zweite universelle Datenträgerauslegung für garantierte Bitratendaten umfasst;
Mittel zum nachfolgenden Durchführen der bedingten Mobilitätsoperation durch Überwachen der mindestens einen Ausführungsbedingung für mindestens eine der Vielzahl von Zielzellen, die in der Funkressourcensteuerungsneuauslegung angezeigt werden, zum Bestimmen, ob ein Zugriff mit der mindestens einen der Vielzahl von Zielzellen zu initiieren ist; und
Mittel zum Bestimmen, die universelle Datenträgerauslegung anstelle einer anfänglichen Datenträgerauslegung nach Synchronisieren mit einem Zielzugriffsknoten (703, 704), während des Durchführens des Überwachens zu verwenden.

2. Einrichtung nach Anspruch 1, wobei die Einrichtung Folgendes umfasst:
Mittel zum Bestimmen, dass die mindestens eine Ausführungsbedingung für eine erste Zielzelle der Vielzahl von Zielzellen erfüllt ist; und
Mittel zum Zugreifen auf die erste Zielzelle unter Verwendung der universellen Datenträgerauslegung nach Synchronisieren mit der ersten Zielzelle.

3. Einrichtung nach Anspruch 2, wobei die Einrichtung nach dem Zugreifen Folgendes umfasst:
Mittel zum Empfangen einer nachfolgenden Datenträgerauslegung zum Kommunizieren von Daten zwischen der Teilnehmereinrichtung und der mindestens einen Zielzelle von der ersten Zielzelle; und
Mittel zum Signalisieren zur und/oder von der ersten Zielzelle unter Verwendung der nachfolgenden Datenträgerauslegung.

4. Einrichtung nach einem der Ansprüche 2 bis 3, wobei die Mittel zum Bestimmen, die universelle Datenträgerauslegung zu verwenden, Folgendes umfassen:
Mittel zum Bestimmen, dass die anfängliche Datenträgerauslegung, die mit der bedingten Mobilitätsoperation verknüpft ist, neu ausgelegt wurde, um eine neu ausgelegte anfängliche Datenträgerauslegung zu bilden; und
Mittel zum Bestimmen, die universelle Datenträgerauslegung zu verwenden, in Reaktion auf die Neuauslegung, um die neu ausgelegte anfängliche Datenträgerauslegung zu bilden.

5. Einrichtung nach einem der Ansprüche 2 bis 3, wobei die Mittel zum Bestimmen, die universelle Datenträgerauslegung zu verwenden, Folgendes umfassen:
Mittel zum Bestimmen, dass die anfängliche Datenträgerauslegung, die mit der bedingten Mobilitätsoperation verknüpft ist, neu ausgelegt wurde, um einen neu ausgelegten anfänglichen Datenträger zu bilden;
Mittel zum Bestimmen, dass die neu ausgelegte anfängliche Datenträgerauslegung mit Bezug auf die anfängliche Datenträgerauslegung destruktiv ist; und
Mittel zum Bestimmen, die universelle Datenträgerauslegung zu verwenden, in Reaktion auf die Bestimmung, dass die neu ausgelegte anfängliche Datenträgerauslegung destruktiv ist.

6. Einrichtung nach Anspruch 1, wobei die Einrichtung Folgendes umfasst:
Mittel zum Bestimmen während des Durchführens des Überwachens, das Verwenden der universellen Datenträgerauslegung nach Synchronisieren mit der mindestens einen der Vielzahl von Zielzellen zu unterlassen;
Mittel zum Erhalten einer dritten Datenträgerauslegung vom Quellzugriffsknoten zum Kommunizieren mit der mindestens einen der Vielzahl von Zielzellen;
Mittel zum Bestimmen, dass die mindestens eine Ausführungsbedingung für eine erste Zielzelle der Vielzahl von Zielzellen erfüllt ist; und
Mittel zum Verwenden der dritten Datenträgerauslegung zum Kommunizieren mit der ersten Zielzelle nach Synchronisieren mit der ersten Zielzelle.

7. Einrichtung nach einem der vorhergehenden Ansprüche, wobei die erste Funkressourcensteuerungsneuauslegung die anfängliche Datenträgerauslegung umfasst.

8. Einrichtung nach einem der vorhergehenden Ansprüche, wobei die Mittel zum Bestimmen, die universelle Datenträgerauslegung anstelle einer anfänglichen Datenträgerauslegung zu verwenden, Folgendes umfassen:
Mittel zum autonomen Entfernen einer bestehenden Zuordnung zwischen Dienstqualitätsströmen und Trägern der anfänglichen Datenträgerauslegung; und
Mittel zum autonomen Neuzuordnen von Dienstqualitätsströmen mit nicht garantierter Bitrate der Dienstqualitätsströme zu Trägern der ersten universellen Datenträgerauslegung und Neuzuordnen von Dienstqualitätsströmen mit garantierter Bitrate der Dienstqualitätsströme zu Trägern der zweiten universellen Datenträgerauslegung.

9. Einrichtung nach Anspruch 8, wobei die Einrichtung Mittel zum Hinzufügen von jeweiligen Dienstdatenanpassungsprotokollheadern zu Paketdateneinheiten, die gemäß mindestens einer der ersten universellen Datenträgerauslegung oder der zweiten universellen Datenträgerauslegung übertragen werden.

10. Einrichtung für einen Quellzugriffsknoten (702), wobei die Einrichtung Folgendes umfasst:
Mittel zum Signalisieren einer ersten Funkressourcensteuerungsneuauslegung zum Auslegen einer Teilnehmereinrichtung zum Durchführen einer bedingten Mobilitätsoperation mit Bezug auf eine von einer Vielzahl von Zielzellen zur Teilnehmereinrichtung (701), wobei die erste Funkressourcensteuerungsneuauslegung eine Anzeige einer universellen Datenträgerauslegung sowie eine Anzeige umfasst, dass eine Verwendung der universellen Datenträgerauslegung zum Verwenden zum Zugreifen auf mindesten eine der Vielzahl von Zielzellen nach Erfüllung von mindestens einer Ausführungsbedingung erlaubt ist, wobei die universelle Datenträgerauslegung eine erste universelle Datenträgerauslegung für nicht garantierte Bitratendaten und eine zweite universelle Datenträgerauslegung für garantierte Bitratendaten umfasst.

11. Einrichtung für einen Zielzugriffsknoten (703, 704), wobei die Einrichtung Folgendes umfasst:
Mittel zum Empfangen einer Anforderung zum Erlauben einer Verwendung einer universellen Datenträgerauslegung zum Kommunizieren von Verkehr zwischen einer Teilnehmereinrichtung (701) und mindestens einer Zielzelle, die vom Zielzugriffsknoten (703, 704) nach einer bedingten Mobilitätsoperation bereitgestellt wird, die von der Teilnehmereinrichtung (701) durchgeführt wird, um auf die mindestens eine Zielzelle zuzugreifen, vom Quellzugriffsknoten (702), wobei die universelle Datenträgerauslegung eine erste universelle Datenträgerauslegung für nicht garantierte Bitratendaten und eine zweite universelle Datenträgerauslegung für garantierte Bitratendaten umfasst; und
Mittel zum Signalisieren einer Anzeige dazu, ob es der mindestens einen Zielzelle erlaubt ist, die universelle Datenträgerauslegung zu verwenden, zum Quellzugriffsknoten (702).

12. Verfahren, das von einer Teilnehmereinrichtung (701) durchgeführt wird, wobei das Verfahren Folgendes umfasst:
Empfangen (1101) einer ersten Funkressourcensteuerungsneuauslegung zum Auslegen der Teilnehmereinrichtung (701) zum Durchführen einer bedingten Mobilitätsoperation mit Bezug auf eine von einer Vielzahl von Zielzellen von einem Quellzugriffsknoten (702), wobei die erste Funkressourcensteuerungsneuauslegung eine Anzeige einer universellen Datenträgerauslegung sowie eine Anzeige umfasst, dass eine Verwendung der universellen Datenträgerauslegung zum Verwenden zum Zugreifen auf eine der mindestens einen der Vielzahl von Zielzellen nach Erfüllung von mindestens einer Ausführungsbedingung erlaubt ist, wobei die universelle Datenträgerauslegung eine erste universelle Datenträgerauslegung für nicht garantierte Bitratendaten und eine zweite universelle Datenträgerauslegung für garantierte Bitratendaten umfasst;
nachfolgendes Durchführen der bedingten Mobilitätsoperation durch Überwachen (1102) der mindestens einen Ausführungsbedingung für mindestens eine der Vielzahl von Zielzellen, die in der Funkressourcensteuerungsneuauslegung angezeigt werden, zum Bestimmen, ob ein Zugriff mit der mindestens einen der Vielzahl von Zielzellen zu initiieren ist; und
Bestimmen (1103), die universelle Datenträgerauslegung anstelle einer anfänglichen Datenträgerauslegung nach Synchronisieren mit einem Zielzugriffsknoten (703, 704), während des Durchführens des Überwachens zu verwenden.

13. Computerprogramm, das Anweisungen umfasst, die, wenn sie von einer Einrichtung für eine Teilnehmereinrichtung (701) ausgeführt werden, die Einrichtung veranlassen, Folgendes durchzuführen:
Empfangen (1101) einer ersten Funkressourcensteuerungsneuauslegung zum Auslegen der Teilnehmereinrichtung (701) zum Durchführen einer bedingten Mobilitätsoperation mit Bezug auf eine von einer Vielzahl von Zielzellen von einem Quellzugriffsknoten (702), wobei die erste Funkressourcensteuerungsneuauslegung eine Anzeige einer universellen Datenträgerauslegung sowie eine Anzeige umfasst, dass eine Verwendung der universellen Datenträgerauslegung zum Verwenden zum Zugreifen auf eine der mindestens einen der Vielzahl von Zielzellen nach Erfüllung von mindestens einer Ausführungsbedingung erlaubt ist, wobei die universelle Datenträgerauslegung eine erste universelle Datenträgerauslegung für nicht garantierte Bitratendaten und eine zweite universelle Datenträgerauslegung für garantierte Bitratendaten umfasst;
nachfolgendes Durchführen der bedingten Mobilitätsoperation durch Überwachen (1102) der mindestens einen Ausführungsbedingung für mindestens eine der Vielzahl von Zielzellen, die in der Funkressourcensteuerungsneuauslegung angezeigt werden, zum Bestimmen, ob ein Zugriff mit der mindestens einen der Vielzahl von Zielzellen zu initiieren ist; und
Bestimmen (1103), die universelle Datenträgerauslegung anstelle einer anfänglichen Datenträgerauslegung nach Synchronisieren mit einem Zielzugriffsknoten (703, 704), während des Durchführens des Überwachens zu verwenden.

## Revendications

1. Appareil pour un équipement utilisateur (701), l'appareil comprenant :
des moyens pour recevoir d'un nœud d'accès source (702) une première reconfiguration de contrôle de ressource radio pour configurer l'équipement utilisateur (701) pour qu'il réalise une opération de mobilité conditionnelle par rapport à au moins une d'une pluralité de cellules cibles, la première reconfiguration de contrôle de ressource radio comprenant une indication d'une configuration de support de données universelle et une indication précisant que l'utilisation de la configuration de support de données universelle est autorisée pour accéder à l'une quelconque de la pluralité de cellules cibles lorsqu'au moins une condition d'exécution est remplie, dans lequel la configuration de support de données universelle comprend une première configuration de support de données universelle pour des données de débit binaire non garanti et une deuxième configuration de support de données universelle pour des données de débit binaire garanti ;
des moyens pour réaliser ultérieurement l'opération de mobilité conditionnelle en surveillant, pour au moins une de la pluralité de cellules cibles indiquées dans la première reconfiguration de contrôle de ressource radio, l'au moins une condition d'exécution pour déterminer s'il faut initier l'accès avec l'au moins une de la pluralité de cellules cibles ; et
des moyens pour, tout en réalisant ladite surveillance, déterminer d'utiliser la configuration de support de données universelle au lieu d'une configuration de support de données initiale après synchronisation avec un nœud d'accès cible (703, 704).

2. Appareil selon la revendication 1, l'appareil comprenant :
des moyens pour déterminer que l'au moins une condition d'exécution est remplie pour une première cellule cible de ladite pluralité de cellules cibles ; et
des moyens pour accéder à la première cellule en utilisant la configuration de support de données universelle après synchronisation avec la première cellule cible.

3. Appareil selon la revendication 2, l'appareil comprenant, ultérieurement à l'accès :
des moyens pour recevoir de la première cellule cible une configuration de support de données ultérieure pour la communication de données entre l'équipement utilisateur et l'au moins une cellule cible ; et
des moyens pour une signalisation à et/ou par la première cellule cible en utilisant la configuration de support de données ultérieure.

4. Appareil selon l'une des revendications 2 et 3, dans lequel les moyens pour déterminer d'utiliser la configuration de support de données universelle comprennent :
des moyens pour déterminer que la configuration de support de données initiale associée à l'opération de mobilité conditionnelle a été reconfigurée pour former une configuration de support de données initiale reconfigurée ; et
des moyens pour déterminer d'utiliser la configuration de support de données universelle en réponse à la reconfiguration pour former la configuration de support de données initiale reconfigurée.

5. Appareil selon l'une des revendications 2 et 3, dans lequel les moyens pour déterminer d'utiliser la configuration de support de données universelle comprennent :
des moyens pour déterminer que la configuration de support de données initiale associée à l'opération de mobilité conditionnelle a été reconfigurée pour former un support de données initial reconfiguré ;
des moyens pour déterminer que la configuration de support de données initiale reconfigurée est destructive par rapport à la configuration de support de données initiale ; et
des moyens pour déterminer d'utiliser la configuration de support de données universelle en déterminant que la configuration de support de données initiale reconfigurée est destructive.

6. Appareil selon la revendication 1, l'appareil comprenant :
des moyens pour déterminer, tout en réalisant ladite surveillance, de s'abstenir d'utiliser la configuration de support de données universelle après synchronisation avec l'au moins une de la pluralité de cellules cibles ;
des moyens pour obtenir une troisième configuration de support de données à partir du nœud d'accès source pour communiquer avec l'au moins une de la pluralité de cellules cibles ;
des moyens pour déterminer que l'au moins une condition d'exécution est remplie pour une première cellule cible de ladite pluralité de cellules cibles ; et
des moyens pour utiliser la troisième configuration de support de données pour communiquer avec la première cellule cible après synchronisation avec la première cellule cible.

7. Appareil selon l'une des revendications précédentes, dans lequel la première reconfiguration de contrôle de ressource radio comprend la configuration de support de données initiale.

8. Appareil selon l'une des revendications précédentes, dans lequel les moyens pour déterminer d'utiliser la configuration de support de données universelle au lieu d'une configuration de support de données initiale comprennent :
des moyens pour supprimer de manière autonome un mappage existant entre des flux de qualité de service et des supports de la configuration de support de données initiale ; et
des moyens pour remapper de manière autonome des flux de qualité de service de débit binaire non garanti desdits flux de qualité de service à des supports de ladite première configuration de support de données universelle, et pour remapper des flux de qualité de service de débit binaire garanti de desdits flux de qualité de service à des supports de ladite deuxième configuration de support de données universelle.

9. Appareil selon la revendication 8, l'appareil comprenant des moyens pour ajouter des en-têtes de protocole d'adaptation de données de service respectifs à des unités de données par paquets transmises selon au moins une parmi la première configuration de support de données universelle ou la deuxième configuration de support de données universelle.

10. Appareil pour un nœud d'accès source (702), l'appareil comprenant :
des moyens pour signaler à un équipement utilisateur (701) une première reconfiguration de contrôle de ressource radio pour configurer l'équipement utilisateur pour qu'il réalise une opération de mobilité conditionnelle par rapport à au moins une d'une pluralité de cellules cibles, la première reconfiguration de contrôle de ressource radio comprenant une indication d'une configuration de support de données universelle et une indication précisant que l'utilisation de la configuration de support de données universelle est autorisée à accéder à au moins une de la pluralité de cellules cibles lorsqu'au moins une condition d'exécution est remplie, dans lequel la configuration de support de données universelle comprend une première configuration de support de données universelle pour des données de débit binaire non garanti et une deuxième configuration de support de données universelle pour des données de débit binaire garanti.

11. Appareil pour un nœud d'accès cible (703, 704), l'appareil comprenant :
des moyens pour recevoir du nœud d'accès source (702) une demande pour permettre l'utilisation d'une configuration de support de données universelle pour communiquer un trafic entre un équipement utilisateur (701) et au moins une cellule cible fournie par le nœud d'accès cible (703, 704), ultérieurement à une opération de mobilité conditionnelle réalisée par l'équipement utilisateur (701) pour accéder à l'au moins une cellule cible, dans lequel la configuration de support de données universelle comprend une première configuration de support de données universelle pour des données de débit binaire non garanti et une deuxième configuration de support de données universelle pour des données de débit binaire garanti ; et
des moyens pour signaler au nœud d'accès source (702) une indication précisant si l'au moins une cellule cible est autorisée à utiliser la configuration de support de données universelle.

12. Procédé réalisé par un équipement utilisateur (701), le procédé comprenant les étapes suivantes :
recevoir (1101) d'un nœud d'accès source (702) une première reconfiguration de contrôle de ressource radio pour configurer l'équipement utilisateur (701) pour qu'il réalise une opération de mobilité conditionnelle par rapport à au moins une d'une pluralité de cellules cibles, la première reconfiguration de contrôle de ressource radio comprenant une indication d'une configuration de support de données universelle et une indication précisant que l'utilisation de la configuration de support de données universelle est autorisée pour accéder à l'une quelconque de la pluralité de cellules cibles lorsqu'au moins une condition d'exécution est remplie, dans lequel la configuration de support de données universelle comprend une première configuration de support de données universelle pour des données de débit binaire non garanti et une deuxième configuration de support de données universelle pour des données de débit binaire garanti ;
réaliser ultérieurement l'opération de mobilité conditionnelle en surveillant (1102), pour au moins une de la pluralité de cellules cibles indiquées dans la première reconfiguration de contrôle de ressource radio, l'au moins une condition d'exécution pour déterminer s'il faut initier l'accès avec l'au moins une de la pluralité de cellules cibles ; et
tout en réalisant ladite surveillance, déterminer (1103) d'utiliser la configuration de support de données universelle au lieu d'une configuration de support de données initiale après synchronisation avec un nœud d'accès cible (703, 704).

13. Programme informatique comprenant des instructions qui, lorsqu'elles sont exécutées par un appareil pour un équipement utilisateur (701), amènent l'appareil à réaliser les étapes suivantes :
recevoir (1101) d'un nœud d'accès source (702) une première reconfiguration de contrôle de ressource radio pour configurer l'équipement utilisateur (701) pour qu'il réalise une opération de mobilité conditionnelle par rapport à au moins une d'une pluralité de cellules cibles, la première reconfiguration de contrôle de ressource radio comprenant une indication d'une configuration de support de données universelle et une indication précisant que l'utilisation de la configuration de support de données universelle est autorisée pour accéder à l'une quelconque de la pluralité de cellules cibles lorsqu'au moins une condition d'exécution est remplie, dans lequel la configuration de support de données universelle comprend une première configuration de support de données universelle pour des données de débit binaire non garanti et une deuxième configuration de support de données universelle pour des données de débit binaire garanti ;
réaliser ultérieurement l'opération de mobilité conditionnelle en surveillant (1102), pour au moins une de la pluralité de cellules cibles indiquées dans la première reconfiguration de contrôle de ressource radio, l'au moins une condition d'exécution pour déterminer s'il faut initier l'accès avec l'au moins une de la pluralité de cellules cibles ; et
tout en réalisant ladite surveillance, déterminer (1103) d'utiliser la configuration de support de données universelle au lieu d'une configuration de support de données initiale après synchronisation avec un nœud d'accès cible (703, 704).
